Europäisches Patentamt

European Patent Office

Office européen des brevets

(11) Veröffentlichungsnummer: **0 224 876**
**A2**

## (12) EUROPÄISCHE PATENTANMELDUNG

(21) Anmeldenummer: **86116494.5**

(22) Anmeldetag: **27.11.86**

(51) Int. Cl.⁴: **F16C 19/00**

(30) Priorität: **04.12.85 DE 3542776**
**11.06.86 DE 3619561**

(43) Veröffentlichungstag der Anmeldung:
**10.06.87 Patentblatt 87/24**

(84) Benannte Vertragsstaaten:
**CH DE FR GB IT LI SE**

(71) Anmelder: **Delta Drive Technik nach dem Gleitkeilprinzip GmbH**
**Glockengasse 12**
**D-6710 Frankenthal(DE)**

(72) Erfinder: **Fickelscher, Kurt G.**
**Herderstrasse 19**
**D-6710 Frankenthal(DE)**

(74) Vertreter: **Klose, Hans, Dipl.-Phys. et al**
**Kurfürstenstrasse 32**
**D-6700 Ludwigshafen(DE)**

(54) **Anordnung mit Wälzelementen.**

(57) Eine Anordnung enthält Wälzelemente (2), die mittels eines Führungsringes (4) geführt und zwischen zwei Stützringen (6, 8) angeordnet sind. Es soll die Aufgabe gelöst werden, bei Vermeidung eines Schlupfes und Reduzierung von Reibung den Reibbeiwert zu reduzieren, wobei Deformationen zugelassen werden sollen. Zur Lösung wird vorgeschlagen, die Wälzelemente (2) jeweils auf und/oder mit einem Bolzen (14) drehbar zu lagern und den Führungsring (4) nachgiebig auszubilden, damit die Führungselemente (2) zueinander Relativbewegungen durchführen können. Die Anordnung ist vor allem als ein Radiallager oder Axiallager ausgebildet und kann darüberhinaus als Reibgetriebe ausgebildet sein.

Fig. 5

## Anordnung mit Wälzelementen

Die Erfindung betrifft eine Anordnung mit Wälzelementen, die mittels eines Führungsringes geführt und zwischen zwei Stützringen angeordnet sind.

In neuen Anwendungsgebieten werden Lagerungen benötigt, die während der normalen Funktion bis zu 3% des Durchmessers ovalisiert werden. Es sei hier beispielshaft auf die US-PS 40 99 427 verwiesen, aus welcher ein Gleitkeilgetrieb bekannt ist. Ein derartiges Getriebe enthält einen beispielsweise ovalen Drehkörper, auf welchem das deformierbare Planetenrad mittels Wälzelementen gelagert ist. Ferner ist aus der US-PS 45 80 957 ein Roll-Ringkompressor bekannt, der einen zum Zylinder exzentrisch angeordneten, dünnwandigen Ringkolben enthält. Der Ringkolben ist mittels Wälzelementen auf einem Drehkörper gelagert und liegt aufgrund der Exzentrizität und einer Deformation in einem vorgebbaren abrollbereich an der Zylinderwand an. Die Lageranordnung mit den Wälzelementen wird entsprechend deformiert. An die heute üblichen Wälzlager werden bei derartigen Deformationen hohe Ansprüche hinsichtlich Kinematik und Belstbarkeit gestellt, wobei erhebliche Einschränkungen hinsichtlich Wirkungsgrad und Lebensdauer zu beachten sind. Besonders nachteilig sind die Reduzierung der Grenzdrehzahl sowie erhöhte Reibbeiwerte, wodurch der Wirkungsgrad des bekannten Gleitkeilgetriebes reduziert wird. Der oben erwähnte Roll-Ringkompressor läßt kinematisch Drehzahlen bis ca. 12 000 Umdrehungen pro Minute zu, die jedoch mit den heute bekannten Lageranordnungen bei weitem nicht realisiert werden können. Bei einer ovalisierten oder deformierbaren Lageranordnung rollen die einzelnen Wälzelemente mit unterschiedlicher Drehzahl über den Umfang ab und bei einem in Umfangsrichtung unnachgiebigen Käfig für die Wälzelemente tritt folglich zwischen Wälzelementen, dem Käfig sowie dem äußeren bzw. inneren Stützring ein Schlupf auf. Der hieraus resultierende höhere Reibbeiwert ist sehr nachteilig und führt zu erhöhten Temperaturen und einem hohen Verschleiß. Werden ferner in einer Lageranordnung die Wälzelemente mittels eines Käfigs geführt, so gleiten die Wälzelemente bei Drehung der Lageranordnung an einer Seite der Käfigtasche, wodurch ein zusätzlicher Rollwiderstand oder Reibanteil bedingt ist. Auch die Reibung des Käfigs an seinen Führungsflächen erhöht das Reibmoment. Ferner erfordern Käfigstege zwischen den einzelnen Wälzelementen einen entsprechend großen Abstand derselben.

Der Erfindung liegt die Aufgabe zugrunde, die Anordnung der eingangs genannten Art dahingehend auszubilden, daß eine Reibung des Führungsringes vermieden oder doch zumindest wesentlich reduziert wird. Der Reibbeiwert der Anordnung soll mit geringem konstruktivem Aufwand und geringem Bauvolumen reduziert werden. Die Wälzelemente sollen bei Vermeidung eines Schlupfes sich an ändernde Abrollgeschwindigkeiten anpassen können, wenn der Abstand der Wälzelemente untereinander, insbesondere bei Deformation, sich verändert. Ferner soll die Anordnung bei Deformationen wenigstens eines der Stützringe einen niedrigen Reibbeiwert aufweisen und einen hohen Wirkungsgrad ergeben. Die Anordnung soll bei einfachem Aufbau ein geringes Gewicht und Bauvolumen und/oder eine lange Lebensdauer und eine hohe Funktionssicherheit aufweisen.

Zur Lösung dieser Aufgabe wird vorgeschlagen, daß die Wälzelemente jeweils auf und/oder mit einem Bolzen drehbar gelagert sind und daß der Führungsring derart nachgiebig ausgebildet ist und/oder die Bolzen mit dem Führungsring derart verbunden sind, daß die Führungselemente relativ zueinander Bewegungen ausführen können.

Die erfindungsgemäße Anordnung zeichnet sich bei funktionssicherer Konstruktion vor allem durch die Vermeidung einer Reibung des Führungsringes bezüglich der Wälzelemente aus. Aufgrund der nachgiebigen Ausgestaltung des Führungsringes können die Führungselemente relativ zueinander Bewegungen ausführen und ein Schlupf wird weitgehend vermieden. Dies ist besonders wichtig bei Deformation wenigstens eines der Stützringe, wodurch ein hoher Wirkungsrad gewährleistet werden kann. Die Wälzelemente können die Außenringe von kleinen Wälzlagern sein, deren Innenring jeweils auf dem Bolzen befestigt ist, welcher außerhalb des Lagerbereiches in dem nachgiebigen und insbesondere elastisch ausgebildeten Führungsring befestigt ist. Folglich wird eine Gleitreibung zwischen dem Wälzelement und dem Führungsring vermieden. Die Wälzkörper der genannten kleinen Wälzlager werden kaum radial belastet, da die zwischen den beiden Stützringen wirksamen Stützkräfte gegenüberliegend praktisch nur auf das Wälzelement wirken und den kleineren inneren Lagerring kaum belasten. Die Wälzkörper des kleinen Wälzlagers werden lediglich durch geringe Rückstellkräfte bei zusätzlicher Deformation des Führungsringes sowie geringe Haltekräfte zur Distanzhaltung belastet. Der Führungsring wird zweckmäßig in einer Ringnut eines der Stützringe geführt, so daß eine direkte seitliche Führung der Wälzelemente quer zur Lagerachse und die Rand- oder Bordreibung der Wälzelemente entfällt. Der Führungsring dreht mit niedrigerer Geschwindigkeit als die Führungselemente, so daß Verschleiß und Reibverluste gering sind.

Eine besonders wesentliche Ausgestaltung ist dadurch gekennzeichnet, daß die Wälzelemente ringförmig ausgebildet sind und daß der innere Lagerring des inneren Wälzlagers und/oder der Bolzen des jeweiligen Wälzelementes nachgiebig ausgebildet sind. Hierdurch kann in überraschend einfacher Weise eine Überlastung der inneren Wälzlager vermieden werden. Grundsätzlich kann die Verformung des ringförmigen Wälzelementes unter Last sehr genau berechnet werden und dementsprechend das Spiel bzw. die Lagerluft des inneren Wälzlagers vorgegeben werden. Wird diese Lagerluft aufgrund einer unvorhergesehenen Überlast überschritten, so können die Wälzelemente des inneren Wälzlagers unzulässig hoch belastet werden. Eine Überlastung kann einerseits durch äußere Einflüsse hervorgerufen sein oder andererseits fertigungsbedingt sein. Es sei insbesondere auf fertigungsbedingte Maßabweichungen der ringförmigen Wälzelemente und/oder der Wälzkörper des inneren Wälzlagers verwiesen. Ferner können speziell bei Ausbildung als Axiallager Planparallelitätsfehler im eingebauten Zustand zu derartigen Überlastungen führen. Bei herkömmlichen Lagern, die statt der ringförmigen Wälzelemente massive Wälzkörper aufweisen, mußten daher hohe Ansprüche an die Maßgenauigkeit gestellt werden, die im Mikrometer-Bereich liegen. Die Deformation einer massiven Vollrolle verläuft infolge der Hertzschen-Pressung progressiv, während die Deformation des ringförmigen Wälzelementes weitgehend linear verläuft. Beim Durchlauf der Hauptlastzone eines Wälzlagers ist die Belastungsänderung des ringförmigen Wälzelementes erheblich kleiner als die einer massiven Vollrolle. Im Vergleich mit einer Vollrolle, bei welcher die hohen Laständerungen vor allem bei hohen Drehzahlen sich durch Geräuschbildung nachteilig bemerkbar machen und ferner die Lebensdauer nachteilig beeinflussen, wird durch die erfindungsgemäßen ringförmigen Wälzelemente die Geräuschbildung wesentlich reduziert und die Lebensdauer der erfindungsgemäßen Anordnung bzw. der erfindungsgemäßen Lagerung nicht unwesentlich verbessert. Die ringförmigen Wälzelemente können in Abhängigkeit von der Wandstärke bis zu 1% des Außendurchmessers deformiert bzw. ovalisiert werden, ohne daß hierdurch eine Beeinträchtigung der Lebensdauer zu befürchten ist.

Der erfindungsgemäß zulässige Bereich der Deformierbarkeit der Wälzelemente wird im Rahmen dieser Erfindung vorteilhaft ausgenutzt, ohne allzu große Ansprüche an die Herstellgenauigkeit der ringförmigen Wälzelemente sowie die Lagerluft des inneren Wälzlagers zu stellen. Auch eine hinsichtlich der Lagerluft an sich nachteilige Aufweitung der Bolzen kann problemlos aufgenommen werden. Ein weiterer wichtiger Vorteil der erfindungsgemäß radial federnd ausgebildeten Wälzelemente wird durch die gleichmäßigere Lastverteilung beim Auftreten einer Radiallast und ferner durch die Vermeidung von Schlupf in der entlasteten Zone erreicht. Es sei festgehalten, daß bei konventionellen, mit einem Käfig geführten Wälzlagern infolge der Lagerluft und einer Radiallast die einzelnen Wälzelemente in der entlasteten Zone durch die Käfig-und Schmiermittelreibung stark abgebremst werden. Beim Einlauf in die Lastzone müssen die Wälzelemente jeweils wieder beschleunigt werden. Hierdurch entsteht Reibungswärme und die Wälzelemente führen Taumelbewegungen in den Käfigtaschen und Rollbahnen aus. Diese Nachteile werden mit den erfindungsgemäßen Wälzlagern in überraschend einfacher Weise zuverlässig vermieden, und zwar durch das Fehlen einer Käfigreibung durch eine geringe radiale Vorspannung mit dem federnden Führungsring; diese Vorspannung ist größer als der Reibwiderstand des inneren Wälzlagers. Die minimalen Bewegungen in Umfangsrichtung beim Ein- und Auslaufen in die Lastzone werden durch den in Umfangsrichtung nachgiebigen Führungsring im Rahmen dieser Erfindung ausgeglichen.

In einer wesentlichen Ausgestaltung ist der innere Lagerring des inneren Wälzlagers als eine dünnwandige Hülse ausgebildet, auf welche die Wälzkörper des inneren Wälzlagers geführt werden. Ferner kann die axiale Länge der Hülse in der Weise vorgegeben werden, daß sie seitlich aus dem Wälzelement herausragt und in dem Führungsring befestigbar ist. Die Hülse bildet bei dieser Ausgestaltung unmittelbar den Bolzen zur Lagerung und Befestigung der Wälzelemente im Führungsring. Besteht ferner der Führungsring beispielsweise aus einem Kunststoff, so kann die Hülse auch auf einem mit dem Führungsring integra len Bolzen angeordnet sein.

In einer besonderen Ausgestaltung sind die inneren Wälzlager einzeln abgedichtet. Hierzu sind vor allem zwei Dichtscheiben vorgesehen, zwischen welchen die Wälzkörper des inneren Wälzlagers sich befinden. Die eine dieser Dichtscheiben weist eine zentrale Öffnung auf, durch welche die Hülse bzw. der Bolzen hindurchgeführt ist, während die axial gegenüberliegende Dichtscheibe vollständig geschlossen ist. Die inneren Wälzlager sind erfindungsgemäß mit Schmiermittel, und zwar zwischen den Dichtscheiben gefüllt, welche aus Kunststoff oder Metall bestehen. Die ringförmige Dichtscheibe kann erfindungsgemäß mit einer Dichtlippe im Bereich der zentralen Öffnung an der Hülse anliegen; auch ein enger ringförmiger Spalt kann im Bereich der Öffnung vorgesehen sein. Wesentlich ist für alle Ausführungsformen, daß die komplette Wälzlageranordnung in optimaler Weise belüftet wird und entstehende Wärme problemlos abgeleitet werden kann. Dies steht im Gegensatz zu den bisher üblichen abgedichteten Lageranordnungen, bei welchen ggfs. Dichtelemente zwischen dem äußeren und dem inneren Stütz-oder Lagerring angeordnet werden. Erfindungsgemäß entfallen derartige Dichtmittel, so daß die Luft zwischen den Wälzelementen ungehindert hindurchtreten kann und gleichwohl die inneren Wälzlager in der angegebenen Weise geschmiert und abgedichtet sind. Die Temperaturerhöhung ist wesentlich niedriger als bei herkömmlichen Wälzlagern.

Die erfindungsgemäße Anordnung kann grundsätzlich als ein Wälzlager bezeichnet werden, dessen Wälzelemente ihrerseits jeweils mittels sogenannten inneren Wälzlagern bezüglich des Führungsringes gelagert sind. Besonders vorteilhaft erweist sich der Einsatz als deformierbares Radiallager bei Maschinen entsprechend den eingangs genannten US-Patentschriften oder bei vergleichbaren Maschinen. Die Erfindung ist gleichwohl nicht hierauf beschränkt, sondern auch in konventionellen Einsatzbereichen, also ohne Deformation oder Ovalisieren, kann vor allem im Hinblick auf die hohe Belastbarkeit und die hohe Grenzdrehzahl der Einsatz der erfindungsgemäßen Anordnung von Vorteil sein. Dies gilt umsomehr, als die Wälzelemente Bestandteil, nämlich äußerer Lagerring, von standardisierten kleinen Wälzlagern im Rahmen dieser Erfindung sind, die kostengünstig im Handel erhältlich sind. Ferner kann die Anordnung als Axiallager ausgebildet sein, bei welchem der Schlupf und die Käfigreibung eine noch größere Bedeutung aufweisen als bei einem Radiallager. Konventionelle Axiallager weisen heute einen Reibbeiwert $\mu$ in der Größenordnung von 0,004 auf. Mit der erfindungsgemäßen Anordnung kann eine nicht unerhebliche Reduzierung des Reibwertes und einer Erhöhung der Grenzdrehzahlen bei einfacher Konstruktion und niedrigem Fertigungsaufwand realisiert werden. Darüberhinaus kann die Anordnung aufgrund der günstigen kinematischen Eigenschaften, der hohen Belastbarkeit und der Möglichkeit die Wälzelemente nahe beieinander anzuordnen, mit geringem Aufwand und bei einfacher Bauweise als ein Planetenreibgetriebe ausgebildet werden.

Die Erfindung wird nachfolgend anhand der Zeichnungen näher erläutert. Es zeigen:

Fig. 1 bis 4 schematische Darstellungen einer bekannten Anordnung, und zwar eines Kugellagers, um die Wirkungszusammenhänge und die hieraus resultierenden bisherigen Nachteile darzulegen,

Fig. 5 eine Prinzipdarstellung der erfindungsgemäßen Anordnung, deren Wälzelemente über Bolzen mittels eines elastischen Führungsringes miteinander verbunden sind,

Fig. 6 einen Schnitt entlang Schnittlinie VI gemäß Fig. 5,

Fig. 7, 8 eine als einreihiges Lager ausgebildete Anordnung, deren Führungsring nachgiebig verformbare Durchbrechungen bzw. Bügel aufweist,

Fig. 9, 10 eine Ausführungsform, bei welcher der Führungsring kettenförmig ausgebildet ist,

Fig. 11, 12 eine Ausführungsform mit ballig ausgebildeten Wälzflächen der beiden Stützringe,

Fig. 13 -15 eine Ausführungsform als Axiallager mit jeweils zwei Wälzelementen pro Bolzen,

Fig. 16, 17 die Ausbildung der Anordnung als Axiallager mit konischen Wälzelementen,

Fig. 18, 19 eine Ausführungsform als Reibgetriebe,

Fig. 20 eine schematische Darstellung der Wälzelemente des Reibgetriebes gemäß Fig. 18, 19,

Fig. 21 ein Reibgetriebe mit einstellbarer Vorspannung der Stützringe,

Fig. 22 eine weitere Ausführungsform als Reibgetriebe mit einem konischen Ziehkeil zur Veränderung des Drehmoments während des Betriebes,

Fig. 23, 24 Ausführungsformen als Reibgetriebe mit Ringspannfedern,

Fig. 25 eine Anordnung, deren Führungsring in einer Ringnut geführt ist,

Fig. 26 ein Last-Weg-Diagramm eines herkömmlichen massiven und eines erfindungsgemäß ringförmigen Wälzelementes,

Fig. 27 schematisch ein massives und ein ringförmiges Wälzelement,

Fig. 28 ein Last-Weg-Diagramm eines ringförmigen Wälzelementes mit einer Stützhülse,

Fig. 29 die Lastverteilung in einem Wälzlager bei radialer Belastung,

Fig. 30 schematisch eine Ansicht zur Erläuterung der Lagerluft bei Belastung,

Fig. 31 ein Wälzelement mit Führungshülse und Dichtscheiben,

Fig. 32 ein Wälzelement, das auf einen elastischen Bolzen des Führungsringes aufgesteckt ist,

Fig. 33 einen axialen Schnitt durch ein Wälzlager mit in Umfangsrichtung versetzt angeordneten Wälzelementen,

Fig. 34 einen Schnitt durch ein Wälzlager mit beidseitiger Lagerung und Führung des Wälzelementes,

Fig. 35 eine axiale Ansicht des Lagers gemäß Fig. 34 mit einem schematisch dargestellten federnden Führungsring,

Fig. 36 ein kombiniertes Radial-Axiallager,

Fig. 37 ein konventionelles Schrägkugellager, das durch das erfindungsgemäße Lager gem. Fig. 36 ersetzt wird,

Fig. 38 eine axiale Ansicht des kombinierten Lagers von Fig. 36,

Fig. 39 eine weitere Ausführungsform eines kombinierten Lagers.

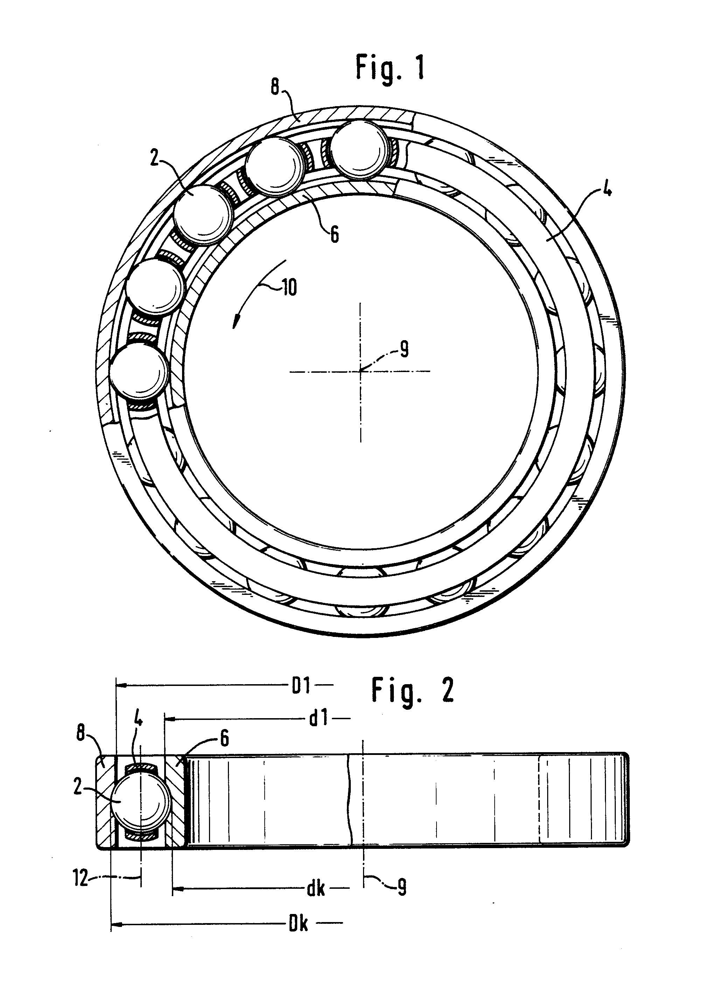

Fig. 1 und 2 zeigen in einer Ansicht bzw. einem Schnitt ein bekanntes Kugellager, dessen Wälzelemente 2 mit einem als Käfig ausgebildeten Führungsring 4 zwischen zwei Lager-bzw. Stützringen 6, 8 geführt sind. Bei Drehung des inneren Stützringes 6 um die Lagerachse 9 in Richtung des Pfeiles 10 gleiten die Wälzelemente 2 an der einen Seite des praktisch starren Führungsringes 4, der ebenfalls in der Drehrichtung angetrieben wird. Trotz dieses zusätzlichen Reibanteiles ist im Vergleich mit einem Lager ohne Käfig der Rollwiderstand ingesamt geringer. Ein Rollen ohne Gleiten findet nur für den Durchmesser Dk-dk, also in der Mitte der Wälzelemente 2 statt. Die Gleit-bzw. Schlupfanteile wachsen in Richtung nach außen zum Durchmesser Dl bzw. nach innen zum Durchmesser dl vom äußeren Stützring 8 bzw. inneren Stützring 6, und zwar entsprechend dem Abstand zur Drehachse 12 des Wälzelementes 2. Bei einer derartigen Lageranordnung liegt der Reibbeiwert $\mu$ zwischen 0,0015 und 0,003, und zwar erheblich über dem Reibbeiwert $\mu$ = 0,0005 eines rein radial belasteten Zylinderollenlagers. Ferner wird der Reibbeiwert mit Zunahme der Last und Drehzahl vergrößert.

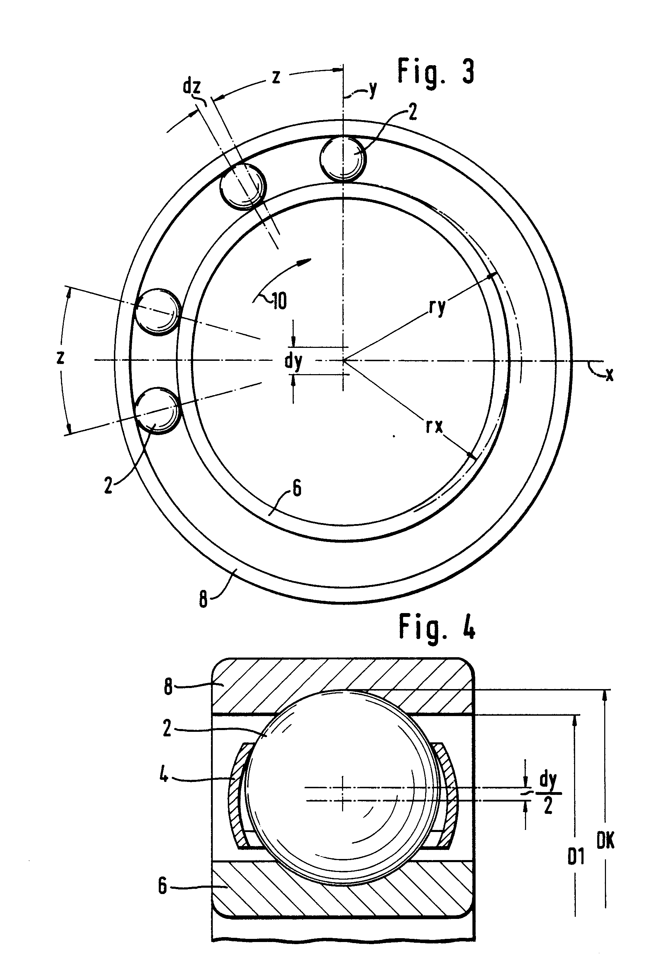

Fig. 3 zeigt schematisch die deformierte Lageranordnung gemäß Fig. 1, wobei die Deformation in Richtung der y-Achse stark vergrößert dargestellt ist. Der Radius ry ist größer als der Radius rx in der x-Richtung. Bei Drehung des inneren oder äußeren Stützringes 6 oder 8 in Richtung des Pfeiles 10 vergrößert sich aufgrund der entsprechenden Durchmesserzunahme auch die Drehzahl des Wälzkörpers 2. Bei einem schlupffreien Abrollen verändert sich folglich auch der Abstand z um den Betrag dz. Da ein Führungsring seine Zwangsdrehzahl von dem am schnellsten drehenden Wälzelement 2 erhält, rollen nur die Wälzelemente, welche sich momentan auf der y-Achse befinden, ohne Schlupf.

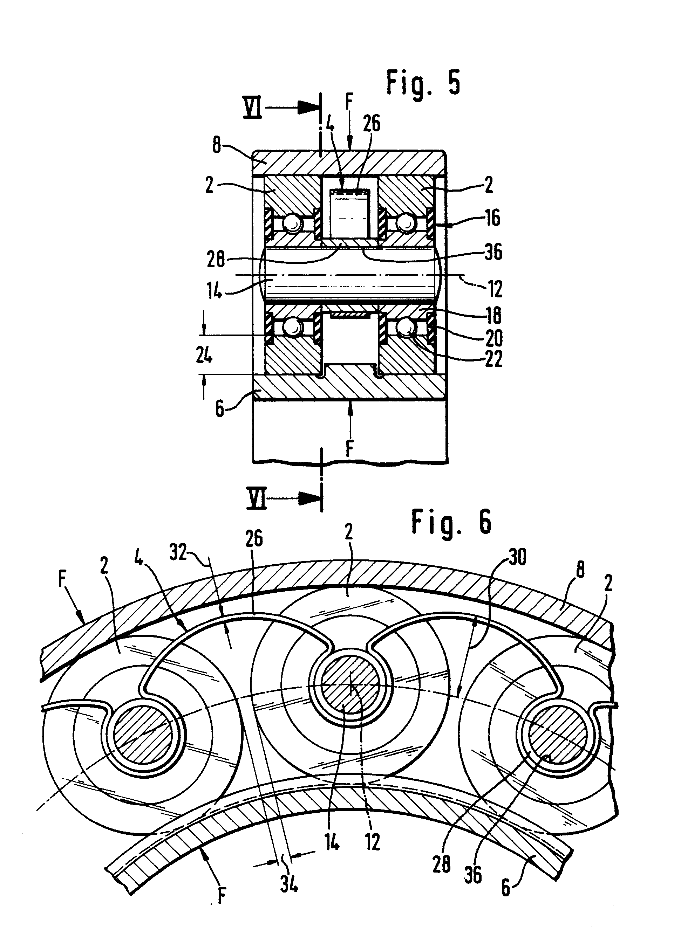

Fig. 4 zeigt vergrößert einen Längsschnitt im Bereich des in Fig. 3 oben dargestellten Wälzelementes 2 auf der y-Achse. Aufgrund der Durchmesservergrößerung um die Hälfte von dy ergibt sich eine Klemmwirkung zwischen dem Wälzelement 2 und dem Führungsring 4. Hierdurch werden einerseits der Freiheitsgrad in Umfangsrichtung beeinträchtigt und darüberhinaus zusätzliche Reibverluste verursacht. Entsprechendes gilt auch für die im Bereich der x-Achse befindlichen Wälzelemente, jedoch gerade umgekehrt. Aus den dargelegten Wirkungszusammenhängen wird ersichtlich, daß bei Deformation der vorbekannten Lageranordnung die Grenzdrehzahl erheblich niedriger liegt, als die üblicherweise in Katalogen für solche Lageranordnungen angegebenen Werte. Entsprechende Aussagen gelten auch bei Anordnungen mit Zylinderrollen, bei welchen die Käfig-und Bordreibung den Reibbeiwert jeder einzelnen Zylinderrolle bei Deformation erheblich erhöht wird.

In Fig. 5 und 6 ist in einem axialen Schnitt und in einer Ansicht die erfindungsgemäße Anordnung dargestellt, welche als ein Wälzlager ausgebildet ist. Zwischen den beiden Stützringen 6 und 8 sind jeweils auf einem Bolzen 14 zwei Wälzelemente 2 drehbar angeordnet. Die Wälzelemente 2 sind jeweils Bestandteil eines inneren Wälzlagers 16 und sind dessen Lageraußenring. Die Lagerinnenringe 18 sind erfindungsgemäß schiebefest mit dem Bolzen 14 verbunden und insbesondere auf diesen aufgepreßt. Zwischen den derart paarweise auf dem Bolzen 14 angeordneten Wälzlagern 16 befindet sich der Führungsring 4, in dessen Bohrungen 36 erfindungsgemäß unter Vorspannung die Bolzen 14 gepreßt sind. Erfindungsgemäß besteht kein Reibkontakt zwischen dem Führungsring 4 und den Wälzelementen 2. Die Verbindung erfolgt im Rahmen dieser Erfindung über die Wälzlager 16 und die Bolzen 14. Die Wälzlager 16 sind mit den dickwandigen Außenringen bzw. Wälzelementen 2 und vergleichsweise dünnwandigen Innenringen 18 versehen und seitlich im Rahmen dieser Erfindung mit Dichtringen 20 abgedichtet. Mittels den als kleine Kugeln 22 ausgebildeten Wälzkörpern werden die Wälzelemente 2 axial und radial bezüglich der Drehachse 12 gelagert. Der mit den Dichtringen 20 abgedichtete Innenraum ist zwecks Dauerschmierung mit Fett gefüllt. Im Rahmen dieser Erfindung gelangen standardisierte Wälzlager 16 mit seitlicher Abdichtung zum Einsatz, wodurch die Herstellkosten der erfindungsgemäßen Anordnung niedrig gehalten werden können. Eine auf die Stützringe 6, 8 wirksame Kraft F wird von den Wälzelementen 2 direkt übertragen, ohne daß die Wälzkörper 22 belastet werden. Die Wanddicke 24 der Wälzelemente 2 ist erfindungsgemäß derart vorgegeben, daß bei Belastung eine Verformung geringer ist als das vorgegebene Lagerspiel der Wälzkörper 22. Die inneren Wälzkörper 22 werden folglich nur mit geringen Kräften von dem federnd nachgiebigen Führungsring 4 beaufschlagt. Es sind die geringen Rückstellkräfte bei zusätzlicher Deformation des Führungsringes sowie geringe Haltekräfte zur Distanzhaltung der einzelnen Bolzen bzw. Wälzelemente 2 aufzunehmen.

Wie aus Fig. 6 ersichtlich, enthält der Führungsring 4 Ausbuchtungen oder bogenförmige Bügel 26 und ringförmige Halterungen 28, in deren Bohrungen 36 die Bolzen 14 unter Vorspannung befestigt sind. Der Führungsring 4 besteht aus einem elastisch nachgiebigen und/oder federnden Werkstoff, genannt sei hier insbesondere Federstahl, der sowohl in Umfangsrichtung als auch in radialer Richtung der einzelnen Bolzen 14 samt darauf angeordneten Wälzelemente 2 ermöglicht. Die eingangs erläuterten Verschiebungen dz und dy der Wälzelemente 2 bei einer Verformung des Stützringes 6 bzw. 8 können erfindungsgemäß ohne nennenswerte Rückstellkräfte erfolgen, wobei der Abstand 30 des Bügels 26 sich entsprechend ändern kann. Die Wanddicke 32 des Bügels 26 ist entsprechend dünn vorgegeben. In Umfangsrichtung weisen die Wälzelemente 2 zueinander einen Abstand 34 auf, welcher erfindungsgemäß sehr klein gehalten werden kann, da der nachgiebige Führungsring 4 seitlich außerhalb des Lager-oder Wälzbereiches der Wälzelemente 2 angeordnet ist. Dies steht im Gegensatz zu üblichen Lageranordnungen, deren Käfige auch in Umfangsrichtung zwischen den Wälzelementen Stege aufweisen. Bei gleichem Durchmesser können somit bei der erfindungsgemäßen Lageranordnung wesentlich mehr Wälzelemente angeordnet werden, wodurch die Tragzahl nicht unwesentlich erhöht werden kann. Fe rner entfällt die oben anhand von Fig. 1 und 2 erläuterte Käfigreibung und folglich auch der Schlupf. Ferner wird bei Ovalisierung eine schlupffreie Drehzahländerung ermöglicht. Somit liegt bei der erfindungsgemäßen Lageranordnung der Reibbeiwert μ bei 0,0005 bis 0,001, also ähnlich dem Wert einer einzelnen Rolle und somit auch erheblich niedriger als bei einem herkömmlichen Wälzlager mit Käfig. Da ferner erfindunggemäß nicht die beiden großen Lager-bzw. Stützringe 6, 8 abgedichtet werden, sondern vielmehr nur die relativ kleinen inneren Wälzlager 16, und zwar mittels den oben genannten Dichtringen 20, ergeben sich auch wesentlich kleinere Dichtgeschwindigkeiten, wobei ferner eine wesentlich bessere Wärmeableitung aus der gesamten Lageranordnung erreicht wird, da die Stützringe 6, 8 und die Wälzelemente 2 frei liegen. Die Grenzdrehzahl der Lageranordnung wird erfindungsgemäß durch die Grenzdrehzahl der kleinen inneren Wälzlager bestimmt. Die somit erreichbare Grenzdrehzahl der Lageranordnung erreicht den doppelten Wert eines vergleichbaren Wälzlagers in Standardbauweise. Bei Deformationen bis in die Größenordnung um 5% wird erfindungsgemäß ein Schlupf sowie eine Reibung am Führungsring vermieden.

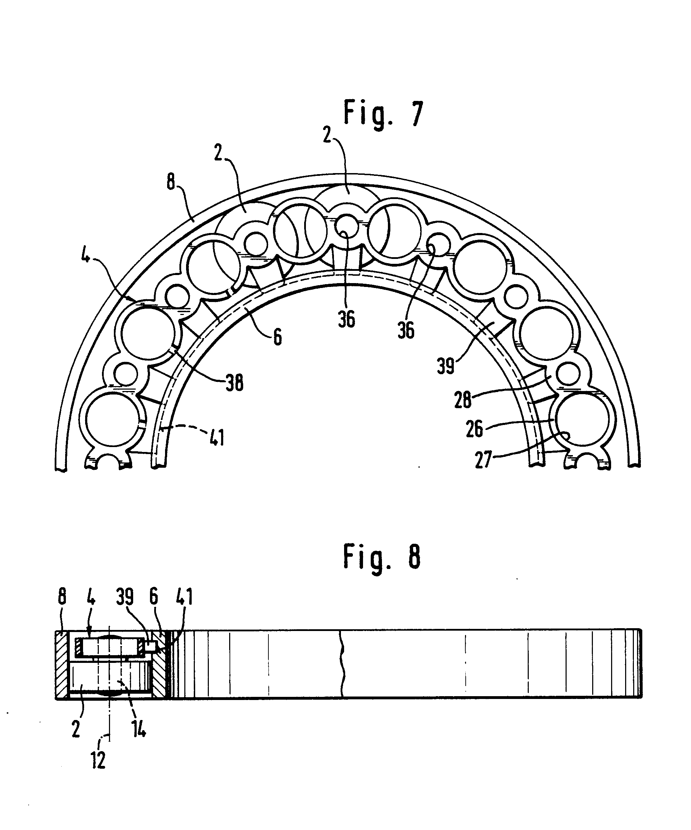

Fig. 7 und 8 zeigen eine einreihige Lageranordnung mit jeweils einem Wälzelement 2 pro Bolzen 14, wobei in Fig. 7 der Einfachheit halber nur zwei der Wälzelemente 2 dargestellt sind. Die Bolzen 14 sind wiederum in Bohrungen 36 von hier geschlossenen ringförmigen Halterungen 28 des Führungsringes 4 befestigt. Die Halterungen 28 sind jeweils über ringförmig ausgebildete Bügel 26 mit Durchbrechungen 27 miteinander verbunden. Der Führungsring besteht aus einem nachgiebigen Kunststoff oder auch aus Metall. Die Nachgiebigkeit wird durch Verformung bzw. Ovalisieren der ringförmigen Bügel 26 erreicht. Insbesondere bei der Metallausführung des Führungsringes 4 kann die Federwirkung durch einen Schlitz 38 reduziert werden, so daß folglich die Verbindung der Halterungen 28 über den gegenüberliegenden Halbbogen des Bügels 26 erfolgt. Wie aus Fig. 8 ersichtlich, weist das Wälzelement 2 in Richtung der Drehachse 12 zum Führungsring 4 einen Abstand auf, um einen Reibkontakt zu vermeiden. Auch bei dieser Ausführungsform befindet sich der Führungsring 4 außerhalb der Wälzbahn der Wälzelemente 2. Die Wälzelemente 2 sind ebenfalls mit hier nicht weiter dargestellten kleinen inneren Wälzlagern bezüglich der Bolzen 14 drehbar.

Der Führungsring 4 enthält radial nach innen gerichtete Teile 39, welche in einer Ringnut 41 des inneren Stützringes 6 eingreifen. Der Führungsring 4 und folglich auch die Wälzelemente 2 sind in der Ringnut 41 axial, also parallel zur Lagerachse 9, geführt. Die Bordreibung, welche üblicherweise bei Führung der Wälzelemente an Ansätzen der Stützringe eintritt, entfällt bei dieser wesentlichen Ausgestaltung. Da der Führungsring 4 mit geringerer Geschwindigkeit als die Wälzelemente bezüglich des Stützringes 6 bewegt wird, sind die durch Reibung bedingten Verluste auch entsprechend gering. Wesentlich im Rahmen dieser Erfindung ist ferner die Anordnung der Teile 39 im Bereich der Lagerungen bzw. Halterungen 28 der Bolzen bzw. der Wälzelemente 2. Die Bewegbarkeit der Wälzelemente 2 zueinander wird durch die Führung des Führungsringes mittels den Teilen 39 in dem Stützring 6 praktisch nicht beeinflußt. Es versteht sich, daß eine vergleichbare Ringnut zusätzlich oder alternativ im Rahmen dieser Erfindung auch im äußeren Stützring 8 vorgesehen werden kann. Bei dieser besonderen Ausgestaltung laufen die Wälzelemente 2 auf den zylindrischen Wälzflächen der Stützringe 6, 8, ohne mit ihren Seitenflächen an Bunden, Ansätzen oder ähnlichem derselben zu gleiten.

Bei den oben erläuterten Ausführungsformen sind die Wälzelemente 2 bezüglich der drehfest im Führungsring 4 befestigten Bolzen 14 drehbar. Alternativ können im Rahmen dieser Erfindung die Bolzen drehbar im Führungsring angeordnet sein und die Wälzelemente jeweils drehfest mit dem Bolzen in Verbindung stehen. Bolzen und Wälzelement können dann ggfs. auch einstückig ausgebildet sein. Es kann ferner eine Gleitlagerung der Wälzelemente bzw. der Bolzen im Führungsring vorgesehen sein, wodurch ein Haltemoment bzw. Losbrechmoment vorgebbar ist; dies kann insbesondere in Hebezeug, Aufzügen oder ähnlichem vorteilhaft sein. Bolzen und Wälzelement können im Rahmen der Erfindung ferner einstückig sein, wobei dann die Bolzen mittels Gleitlager in den Bohrungen des Führungsringes gelagert sind.

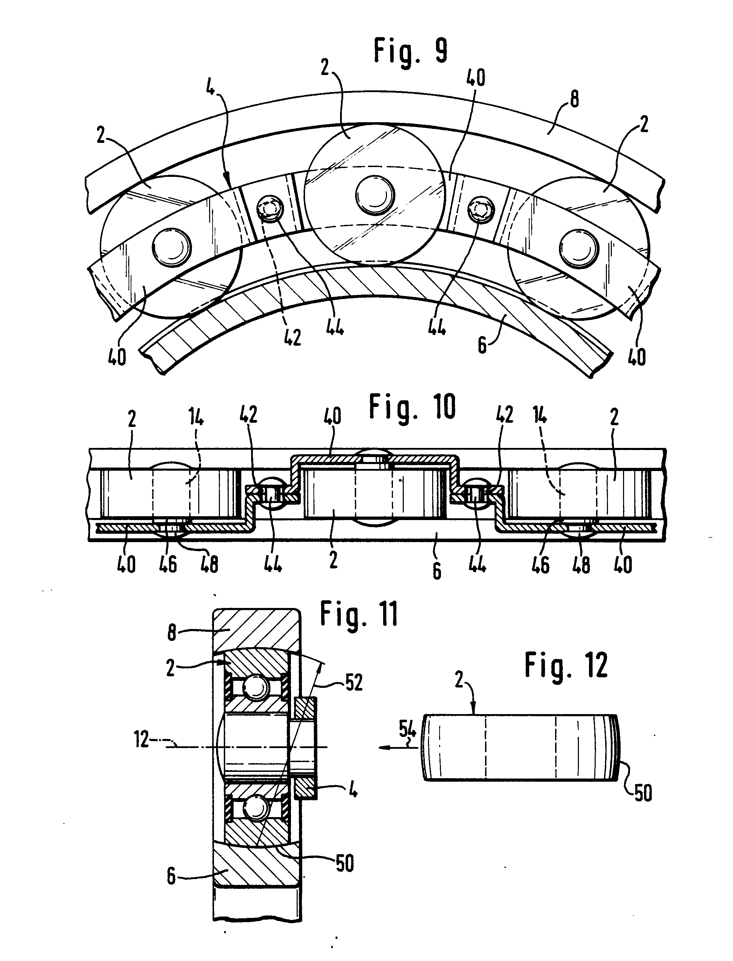

Die Fig. 9 und 10 zeigen eine Ausführungsform der Anordnung mit einem kettenförmig ausgebildeten Führungsring 4. Die Bolzen 14 sind jeweils in einem Glied 40 befestigt, das wenigstens an einem Ende ein Langloch 42 aufweist. Die einzelnen Glieder 40 sind jeweils mittels Nieten 44 miteinander verbunden, wobei das Langloch eine Verschiebung in Umfangsrichtung ermöglicht. Weist das Langloch 42 darüberhinaus in radialer Richtung eine größere Weite als der Nietdurchmesser auf, so wird eine Bewegbarkeit in radialer Richtung ermöglicht. Ggfs. kann das Langloch 42 auch durch eine Bohrung mit entsprechend großem Durchmesser ersetzt werden, um erfindungsgemäß die Relativbewegungen in Umfangsrichtung sowie in radialer Richtung zu ermöglichen . Der Bolzen 14 liegt mit einem Bund 46 zwecks Abstandvorgabe zum Führungsring 4 an diesm an, wobei außen durch Umschlagen oder Vernieten des Kopfes 48 die Befestigung erfolgt.

Die Ausführungsform gemäß Fig. 11 ermöglicht die Aufnahme von geringen Axialkräften in Richtung der zur Lagerachse parallelen Drehachse 12 des Wälzelements 2. Die Außenfläche 50 und ebenso die Laufbahnen der Stützringe 6, 8 sind ballig ausgebildet und mit einem Radius versehen. Um den eingangs anhand von Fig. 1 erläuterten Schlupf zu reduzieren, ist der Radius 52 gegenüber dem Radius einer Vollkugel vorgrößert. Der Radius 52 ist bei dieser wesentlichen Ausführungsform gleich groß wie der Durchmesser des Wälzelementes 2. Wie in Verbindung mit Fig. 12 ersichtlich, wird zur Montage das Wälzelement 2 von der Seite her in Richtung des Pfeiles 54 zwischen die Stützringe 6 und 8 eingeführt und durch Schwenken in die Position gemäß Fig. 11 gebracht.

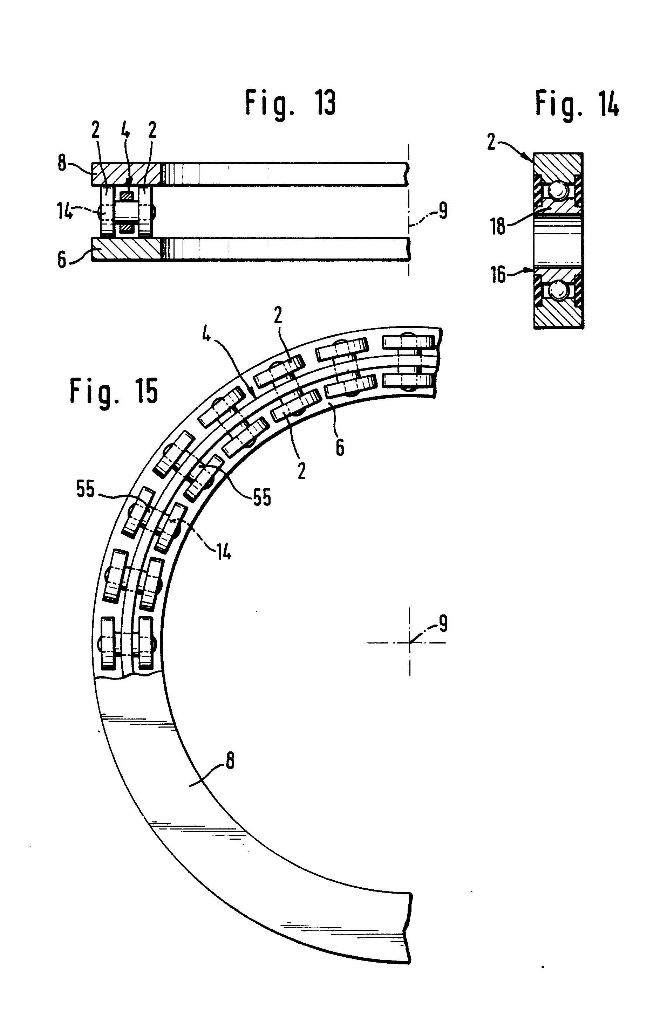

In den Fig. 13 bis 15 ist eine Ausführungsform der Anordnung als Axiallage schematisch dargestellt. Die Stützringe 6, 8 sind mit einer Axialkraft parallel zur Lagerachse 9 belastbar. Der bei dieser Ausführungsform steif ausgebildete Führungsring 4 weist in Umfangsrichtung eine Anzahl von paarweise nebeneinander angeordneten Wälzelementen 2 auf, welche wiederum auf Bolzen 14 drehbar angeordnet sind, ohne direkt mit dem Führungsring 4 in Kontakt zu kommen. Im Gegensatz zu üblichen Axiallagern mit Käfig, der keine enge Teilung der Wälzelemente ermöglicht, sind die Wälzelemente 2 von in Umfangsrichtung benachbarten Bolzen 14 vergleichsweise eng beieinander angeordnet, wodurch eine günstige Tragzahl realisiert werden kann, obgleich aufgrund des Führungsringes nicht die gesamte zur Verfügung stehende Breite der Stützringe 6, 8 als Tragfläche genutzt werden kann. Durch die jeweils paarweise Anordnung der Führungsrollen 2 wird der Schlupf im Vergleich zu einem konventionellen Axiallager mit jeweils einem relativ breiten Wälzelement erheblich reduziert. Als besonders zweckmäßig hat sich ein Durchmesser-Breitenverhältnis in der Größenordnung des Wertes 2 oder darüber erwiesen. Das der Lagerachse 9 nächstliegende Wälzelement 2 kann mit geringerer Drehzahl drehen als das auf dem gleichen Bolzen 14 in einem größeren Abstand zur Lagerachse angeordnete andere Wälzelement, wodurch der Schlupf und Reibverluste klein gehalten werden können. Ferner kann auch eine Fliehkraftbeanspruchung des Führungsringes nicht zu zusätzlichen Reibmomenten führen, wie es bei einem üblichen Axialrollenlager der Fall ist. Die Bolzen 14 weisen eine Ringschulter 55 auf, an welcher die Lagerinnenringe 18 anliegen, um erfindungsgemäß den Abstand der Wälzelemente 2 zum Führungsring 4 zu sichern. Fliehkräfte der Wälzelemente werden über die Befestigung der Bolzen, und zwar insbesondere über Haftreibung, im Führungsring 2 aufgenommen. Infolge der fehlenden Reibung zwischen Führungsring 4 und den Wälzelementen 2 sowie des geringen Schlupfes werden hohe Grenzdrehzahlen möglich, und zwar bei einem wesentlich niedrigeren Reibbeiwert $\mu$ in der Größenordnung von 0,0012 bis 0,0015.

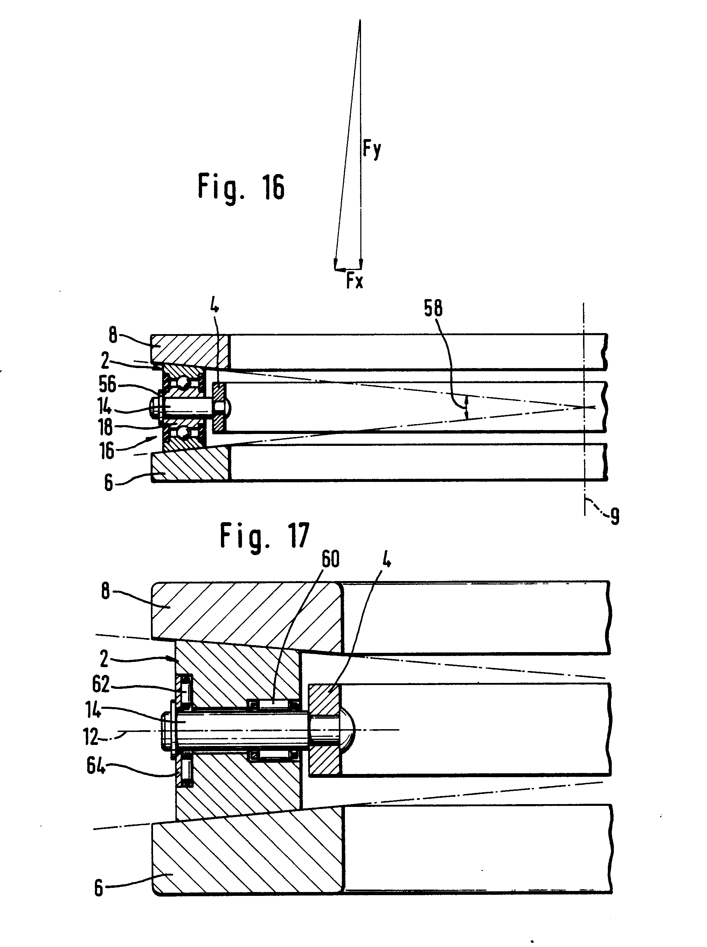

Fig. 16 zeigt ein Axiallager, das einen idealen Abrollwiderstand aufweist. Am Führungsring 4 sind über den Bolzen 14 und das innere Lager 16 die mit einer konischen Außenfläche versehenen Wälzelemente 2 befestigt. Mit einem Sicherungsring 56 wird der innere Lagerring 18 auf dem Bolzen 14 gesichert. Die Lagerflächen sind ebenfalls konisch ausgebildet. Die Kegelspitzen - schneiden die Lagerachse 9, und erfindungsgemäß laufen folglich die Wälzelemente 2 schlupffrei auf den lagerflächen. der Stützringe 6, 8; das Rollverhältnis Da:da ist konstant. Erfindungsgemäß wird der Durchmesser der Wälzelemente 2 zum Durchmesser der Stützzringe 6, 8 in der Weise vorgegeben, daß der Öffnungswinkel 58 des genannten Kegels relativ klein ist und insbesondere zwischen 2° und 4° groß ist. Aufgrund des kleinen Öffnungswinkels 58 bleibt beim Einwirken einer Axialkraft Fy die vom Führungsring 4 aufzunehmende Radialkraft Fx relative gering. Bei der Ausführungsform gemäß Fig. 14 werden die Radialkräfte zusammen mit der Fliehkraft des Wälzelementes 2 durch die Wälzkörper des Wälzlagers 16 aufgenommen und über den eingespannten Bolzen 14 auf den Führungsring 4 übertragen.

Für größere Lagerabmessungen ist die in Fig. 17 dargestellte Ausführungsform des Axiallagers von Vorteil. Die Wälzelemente 2 sind auf dem Bolzen 14 radial bezüglich ihrer Drehachse 12 mittels eines Nadellagers 60 gelagert. Zur axialen Lagerung bezüglich der Drehachse 12, also zur Übertragung der Radialkräfte FX bezogen auf die Lagerachse 9, dient ein weiteres Nadellager 62,das über eine Stützscheibe 64 bzw. den Sicherungsring 56 auf dem Bolzen 14 abgefangen ist.

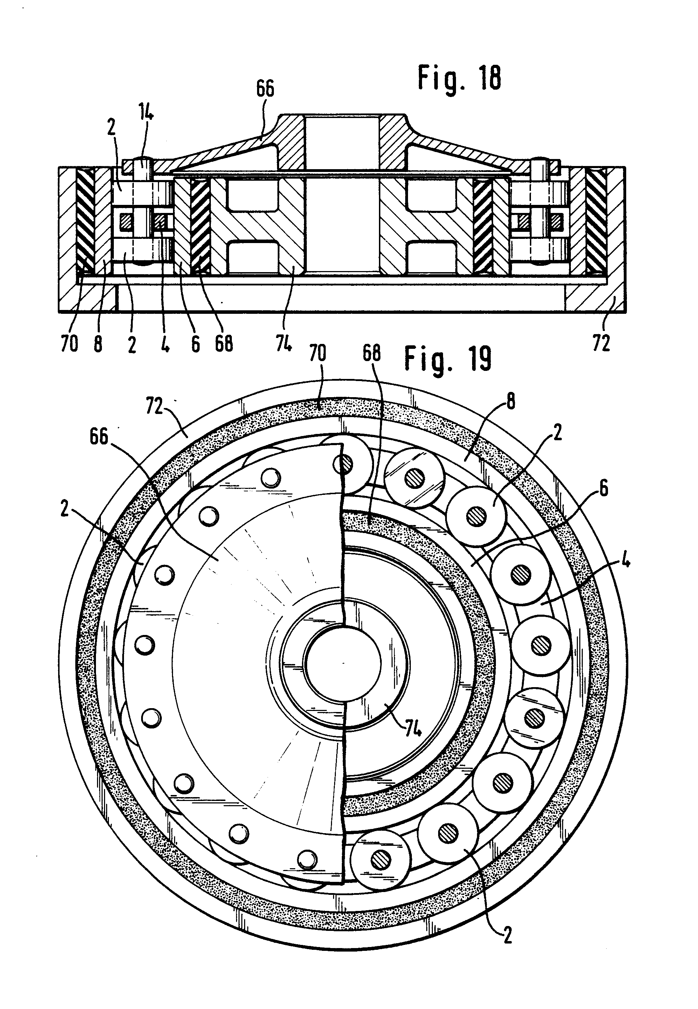

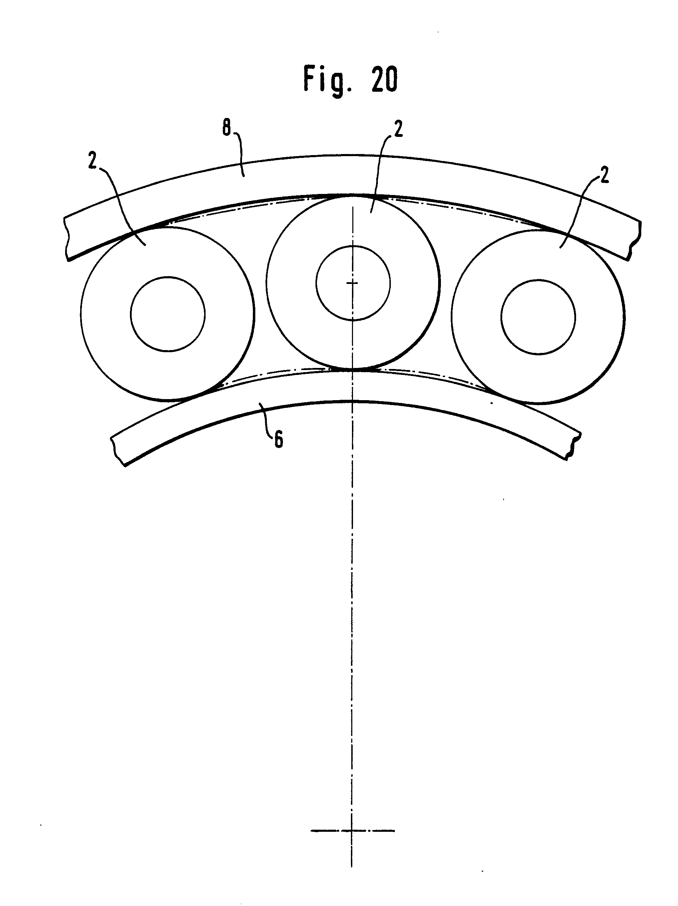

Fig. 18 und 19 zeigen in einem axialen Schnitt und in einer Ansicht eine wesentliche Ausführungsform als Planetenreibgetriebe bei einem Übersetzungsverhältnis i = 1:2,26. Das Reibgetriebe enthält siebzehn, jeweils paarweise über den Umfang verteilte Wälzelemente 2. Jeweils in der Mitte zwischen zwei auf den Bolzen 14 angeordneten Wälzelementen 2 ist der Führungsring 4 erfindungsgemäß berührungsfrei bezüglich der Wälzelemente 2 angeordnet. Die Bolzen 14 sind auf er einen Seite herausgeführt und in Bohrungen eines Kupplungsteiles 66 befestigt. Die Wälzelemente 2 sind zwischen den beiden dünnwandigen Stützringen 6, 8 vorgespannt, welche insbesondere aus einem gehärteten Federstahl bestehen. Der freie Zwischenraum zwischen den beiden Stützringen 6, 8 ist erfindungsgemäß kleiner als der Außendurchmesser der Wälzelemente 2. Die Stützringe 6, 8 sind erfindungsgemäß dünnwandig und elastisch verformbar.

Wie in Verbindung mit Fig. 20 ersichtlich, wird aufgrund der genannten Vorspannung eine geringfügige Umschlingung der Wälzelemente 2 von den Wälzflächen der dünnwandigen Stützringe 6, 8 bewirkt. Wie durch die strichpunktierten Linien angedeutet, wird aufgrund der Vorspannung der äußere Stützring 8 gestreckt, während der innere Stützring 6 nach außen ausbeult. Aufgrund der Umschlingung der Wälzelemente wird die Hertz'sche Pressung verkleinert. Die Vorspannung erzeugt gleichmäßig auf die einzelnen Wälzelemente verteilte Radialkräfte. Das maximal übertragbare Drehmoment wird durch den im Rahmen dieser Erfindung einstellbaren Grad der Vorspannung vorgegeben. Zur Erzeugung der Vorspannung ist der Stützring 6 auf einem Ring 68 bzw. einer Schicht aus einem federelastischen Werkstoff, einem Elastomer, inbesondere Gummi oder einem entsprechenden Kunststoff, angeordnet. Entsprechend ist der äußere Stützring 8 über einen Ring oder eine Schicht 70 in einem Gehäuse 72 angeordnet. Erfindungsgemäß wird die Schichtdicke derart vorgegeben, daß gleichzeitig auch eine Drehmomentdämpfung oder eine Schwingungsdämpfung erfolgt und ggfs. auch ein Versatz zwischen dem Kupplungsteil 66 und der Getriebewelle 74 ausgeglichen werden kann. Bei dieser erfindungswesentlichen Ausführungsform kann auf eine elastische Antriebskupplung verzichtet werden.

Das erfindungsgemäße Getriebe kann bei einem Abrolldurchmesser von 120 mm ein maximales Drehmoment von 400 Nm bei einem Wirkungsgrad von 98% übertragen. Im Vergleich hierzu sei festgehalten, daß ein verzahntes Planetengetriebe aufgrund der Verzahnungsgeometrie und den kleinstmöglichen Durchmessern der Planetenräder ein Übersetzungsverhältnis von 1:2,5 kaum unterschritten werden kann; üblicherweise sind bei einem Planetengetriebe drei Planetenräder über den Umfang verteilt, wodurch dem übertragbaren Drehmoment Grenzen gesetzt sind. Mit dem Reibgetriebe können Übersetzungsverhältnisse i bis ca. 1:2,1 bis ca. 1:3,5 realisiert weren. Erfindungsgemäß können die Wälzelemente relativ kleine Durchmesser aufweisen und kleinere Übersetzungsverhältnisse funktionssicher realisiert werden. Erfindungsgemäß ist die Vorspannung und somit die übertragbare Kraft einstellbar.

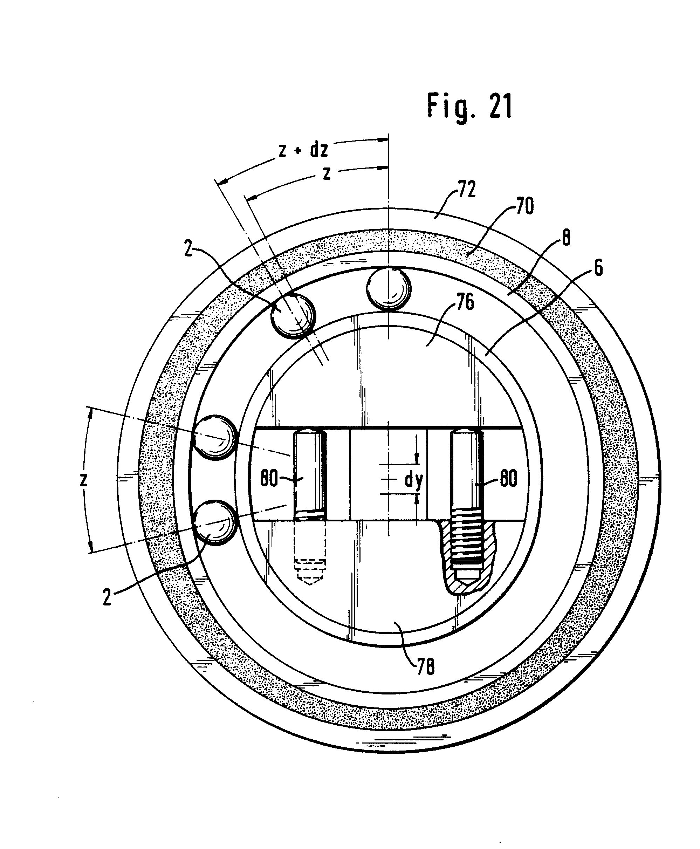

Fig. 21 zeigt schematisch eine Ausführungsform des Getriebes mit überproportional dargestellter Deformation dy eines dünnwandigen inneren Stützringes 6 mittels zwei Antriebsnocken oder Haltekörpern 76, 78. Die Haltekörper 76, 78 sind segmentartig ausgebildet, wobei mittels Bolzen 80 der gegenseitige Abstand und folglich auch die Verformung dy vorgegeben wird. Der relativ dickwandige äußere Stützring 8 ist wiederum über eine Schicht 70 oder einen Gummiring oder dergleichen in dem Gehäuse 72 abgestützt bzw. in dieses vulkanisiert. Durch entsprechende Vorgabe der Wandstärke, und zwar insbesondere des Stützringes 8, zum Duchmesser läßt sich erfindungsgemäß proportional zur Deformation die radiale Kraftbeaufschlagung genau vorausberechnen. Das gewünschte Drehmoment ist durch Auseinanderdrücken der beiden Antriebsnocken bzw. Haltekörper 76, 78 mittels der Schraubbolzen 80 genau einstellbar. Die Schichtstärke der Schicht 70 zwischen dem Gehäuse 72 und dem äußeren Stützring 8 liegt im Rahmen dieser Erfindung in der Größenordnung von dem 10fachen Wert der Hälfte der maximalen Deformation dy. Diese Ausführungsform zeichnet sich durch die Einstellbarkeit des Drehmoments und das selbständige Nachstellen bei Verschleiß aus. Erfindungsgemäß sind die Wälzelemente 2 in der oben dargelegten Weise mittels eines hier nicht dargestellten Führungsringes geführt.

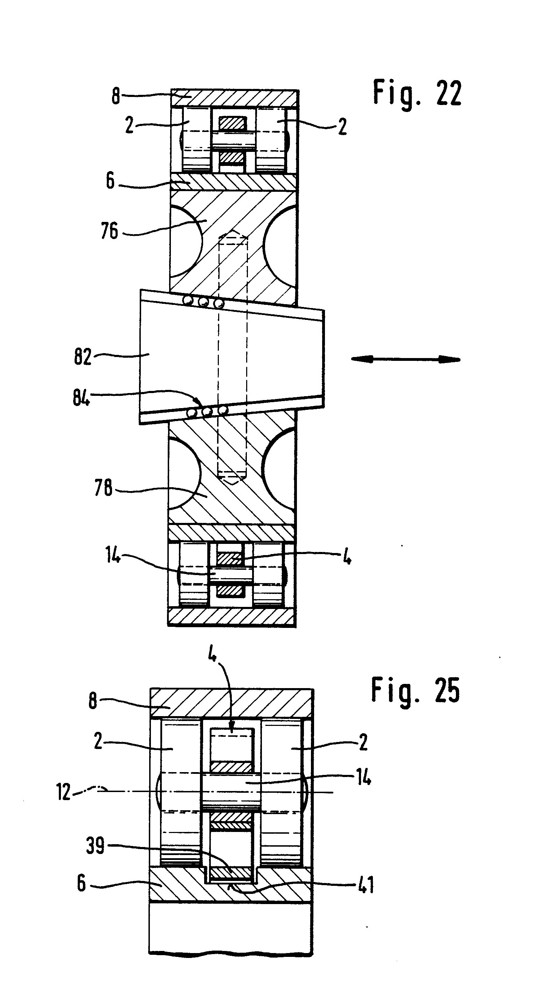

Fig. 22 zeigt eine Ausführungsform des Getriebes, dessen Haltekörper 76, 78 mittels eines konischen Ziehkeiles 82 gegeneinander verstellbar sind. Bei dieser wesentlichen Aus führungsform kann entsprechend der Verstellung des Ziehkeiles 82 während des Betriebes das Drehmoment verstellt werden. Zwischen dem Ziehkeil 82 und den Haltekörpern bzw. Antriebsnocken 76, 78 sind zur Reduzierung der Reibung Nadellagerkäfige 84 angeordnet. Diese Ausführungsform gelangt vorteilhaft zum Einsatz, wenn beim Anfahren große Massen beschleunigt werden müssen. Durch Verschieben des Ziehkeiles 82 derart, daß die Deformation dy gegen Null geht, geht auch die Radialbeaufschlagung der Wälzelemente 2 gegen Null. Eine vorgeschaltete Antriebsmaschine läuft folglich im Leerlauf an und durch Verschieben des Ziehkeiles 82 wird die zu beschleunigende Masse, beispielsweise einer Pumpe, mit entsprechender Drehmomentübertragung auf den Sollwert beschleunigt.

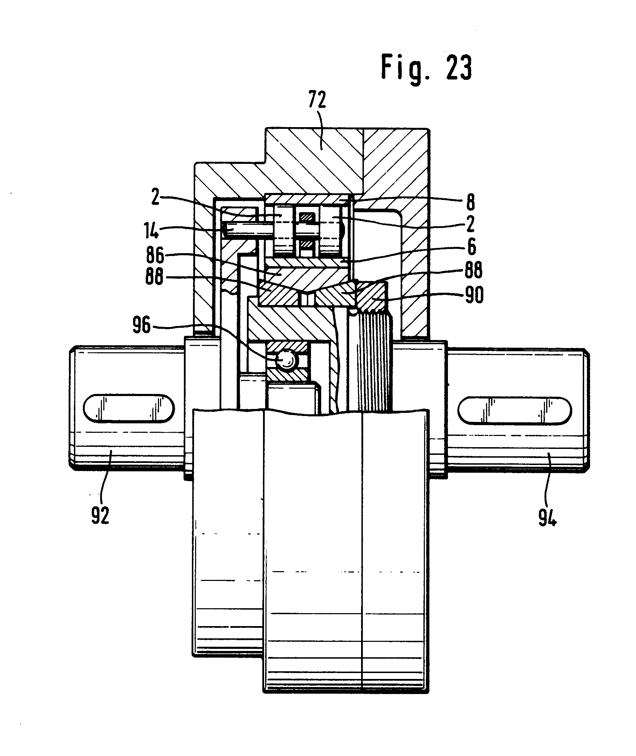

Fig. 23 zeigt eine Ausführungsform des Getriebes mit einem fest in dem Gehäuse 72 angeordneten äußeren Stützring 8. Der innere Stützring 6 ist auf einer Ringspannfeder 82 angeordnet, die in bekannter Weise auf zwei Kegelringen 88 angeordnet ist. Durch Festziehen der Spannmutter 90 kann bei dieser erfindungswesentlichen Ausführungsform der innere Stützring 6 aufgeweitet werden, um die oben erläuterte Verspannung über die Wälzelemente 2 in der gewünschten Weise vorzunehmen. Das übertragbare Drehmoment zwischen den Wellen 92, 94 wird entsprechend der Vorspannung bzw. entsprechend der Einstellung der Spannmutter 90 vorgegeben. Das Nachstellen des Drehmomentes bei Verschleiß kann in einfacher Weise durch Anziehen der Spannmutter 90 erfolgen. Die beiden Wellen 92, 94 sind mittels eines Lagers 96 gegeneinander abgestützt und ausgerichtet, wobei das Drehmoment über die verlängerten Bolzen 14 auf die Welle 92 übertragbar ist.

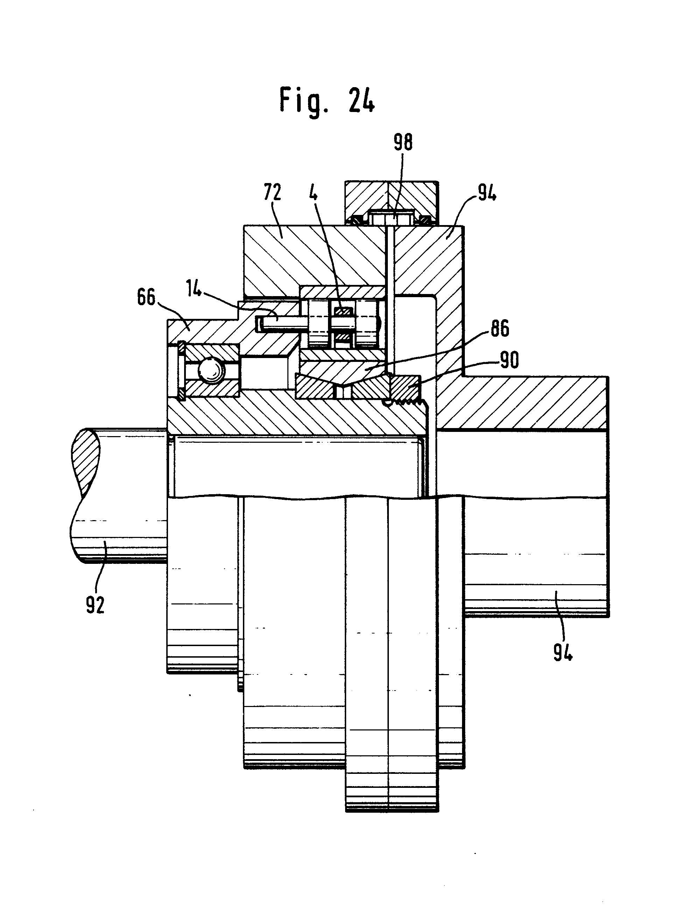

Schließlich zeigt Fig. 24 eine Ausführungsform, bei welcher der Führungsring 4 bzw. die Bolzen 14 mit dem Kupplungsteil 66 verbunden sind. Bei dieser Ausführungsform wird nicht das Gehäuse, sondern das Kupplungsteil 66 festgehalten, um ein Drehmoment von der einen Welle 92 auf die andere Welle 94 zu übertragen. Die Einstellung des Drehmoments erfolgt entsprechend dem vorherigen Beispiel wieder über die Spannmutter 90 und die Ringspannfeder 86. Das Gehäuse 72 ist mit der hier in der Zeichnung rechts dargestellten Welle 94 über eine nachgiebige Kupplung 98, welche zweckmäßig als eine Gleitkeilkupplung bzw. Zahnbandkupplung nach dem Gleitkeilprinzip ausgebildet ist, verbunden, so daß ein Versatz der Wellen 92, 94 problemlos aufgenommen werden kann.

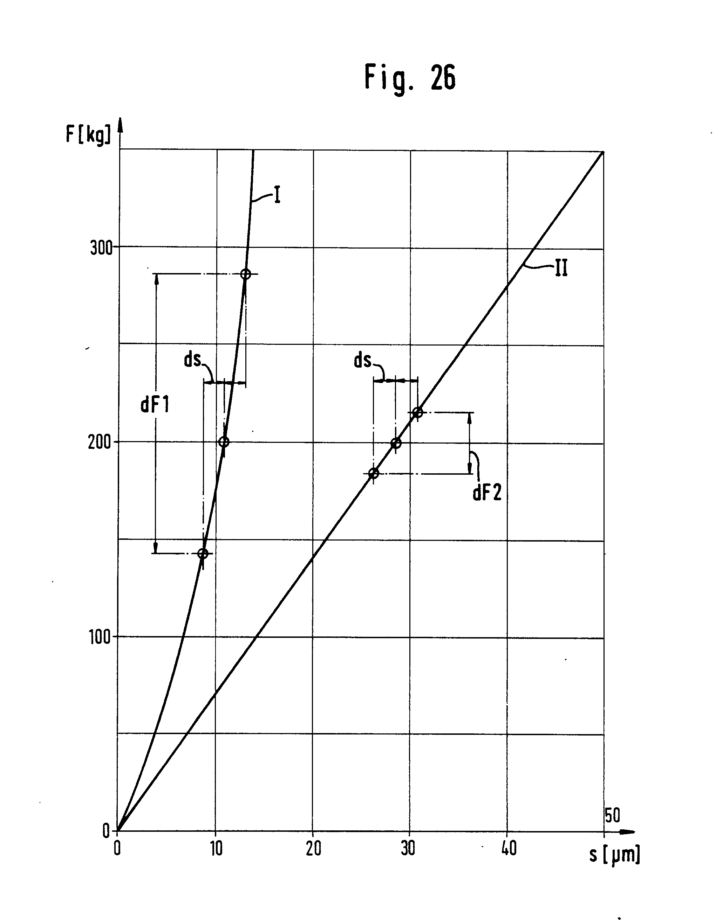

Fig. 25 zeigt schematisch ähnlich Fig. 5 die wesentliche Ausgestaltung mit einer Ringnut 41 im inneren Stützring 6. Der Führungsring 4 greift mit dem Teil 39 in diese Ringnut 41 und übernimmt die axiale Führung der Wälzelemente 2. Die Wälzelemente 2 und der Bolzen 14 sind jeweils zueinander sowie bezüglich des Führungsringes 4 in Richtung der Drehachse 12 gegen Verschiebung gesichert und befestigt. Diese axiale Befestigung erfolgt besonders durch Preßsitz, doch können im Rahmen dieser Erfindung auch vergleichbare Maßnahmen, wie Sicherungsringe, Ansätze, Bunde oder ähnliches zur gegenseitigen axialen Festlegung der Wälzelemente 2, des Führungsringes 4 sowie der Bolzen 14 vorgesehen werden.

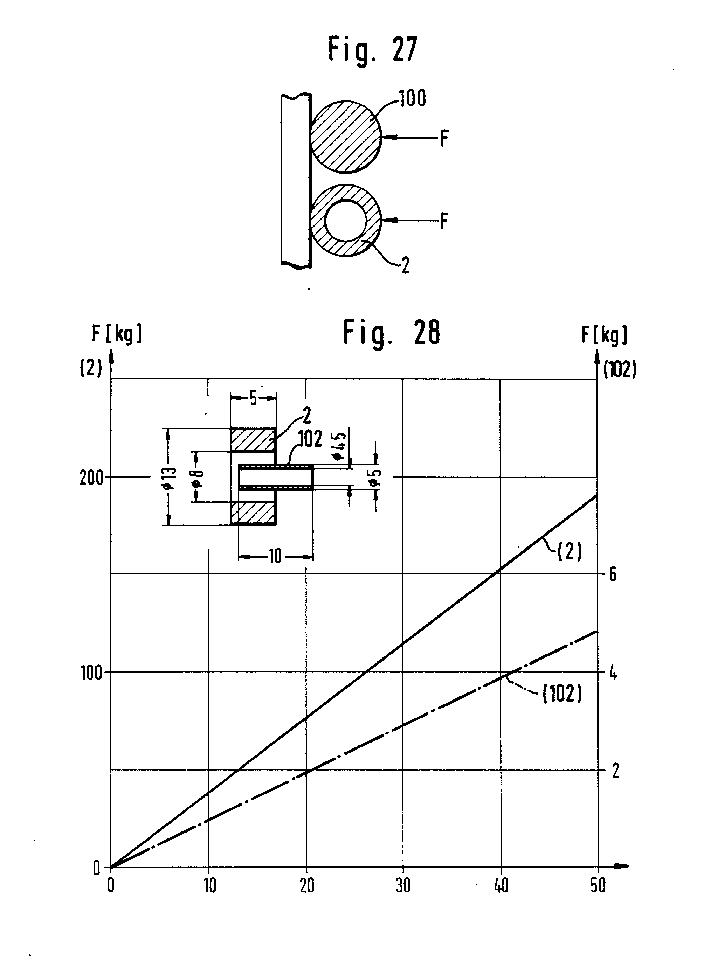

Fig. 26 ist die unter einer Last F auftretende Deformation eines massiven Führungselementes entsprechend der Kurve I und eines ringförmigen Führungselementes entsprechend der Kurve II dargestellt. Die Deformation des in Fig. 27 schematisch angedeuteten massiven Wälzelementes 100 verläuft infolge der Hertzschen-Pressung progressiv, während die Deformation des ringförmigen Wälzelementes 2 weitgehend linear verläuft. Bei einer angenommenen Belastung von F = 200kg ergibt sich für das Wälzelement 100 eine Deformation von etwa 11 Mikrometern, während für das ringförmige Wälzelement 2 eine Deformation von etwa 29 Mikrometern auftritt. Setzt man nun für beide Wälzelemente 100, 2 eine gleiche Fertigungstoleranz ds von plus/minus 2 Mikrometern an, so ergibt sich beim Durchlauf der Hauptlastzone des Wälzlagers für das massive Wälzelement 100 eine Belastungsänderung dF1 von etwa plus/minus 80kg. Hingegen ergibt sich für das erfindungsgemäß ringförmige Wälzelement 2 eine erheblich geringere Belastungsänderung dF2 von plus/minus 12kg. Folglich werden durch die vorgeschlagene ringförmige Ausgestaltung des Wälzelements 2 Laständerungen erheblich reduziert, die bisher vor allem bei hohen Drehzahlen zu nachteiligen Geräuschen führten und ferner die Lebensdauer beträchtlich verringerten.

Fig. 28 zeigt beispielshaft ein Last-Weg-Diagramm eines Wälzelementes 2, das mittels hier nicht weiter dargestellten Führungskörpern erfindungsgemäß auf einer dünnwandigen Hülse 102 gelagert ist. Das Wälzelement 2, das erfindungsgemäß als eine im wesentlichen zylindrische Rolle mit einer zentralen Bohrung ausgebildet ist, weist eine axiale Länge von 5mm und einen Außendurchmesser von 13 und einen Innendurchmesser von 8mm auf. Die Hülse 102 weist hingegen einen Außendurchmesser von 5mm und einen Innendurchmesser von 4,5 mm bei einer axialen Länge von 10mm auf. Beträgt also beispielsweise die Wandstärke der Hülse 102 ca. 5% vom Außendurchmesser, dann werden bei einer über die Lagerluft hinausgehenden Deformation von beispielshaft 20 Mikrometern pro Meter auf die inneren Wälzelemente nur ca. 1% der zusätzlich auftretenden Stützkraft delta F wirksam, die beispielshaft ca. 200kg betragen soll. Die erfindungsgemäße Lageranordnung ist daher auch anwendbar, wenn hohe Laststöße auftreten oder Planparallelitätsfehler durch den Einbau gegeben sind. Ferner können auch erhöhte Herstelltoleranzen zugelassen werden, wodurch eine kostengünstige Fertigung gewährleistet wird.

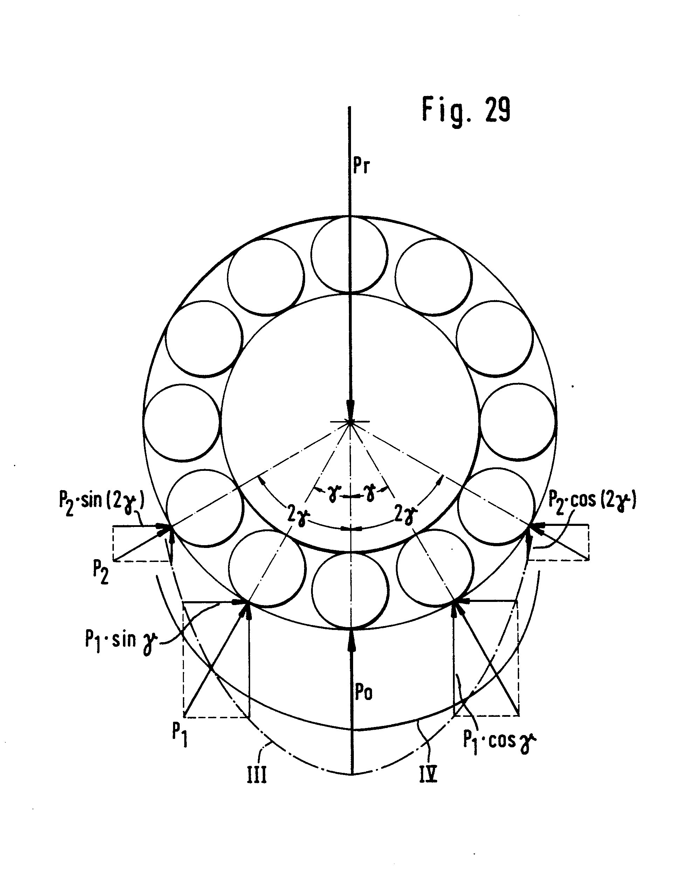

In Fig. 29 ist schematisch die Lastverteilung eines Radiallagers bei Belastung mit einer Radialkraft Pr dargestellt. Die Kurve III gilt für massive Wälzelemente und die Kurve IV gilt für ringförmige Führungselemente. Aufgrund der radikalen Deformierbarkeit der ringförmigen Wälzelemente ergibt sich eine wesentlich gleichmäßige Lasttverteilung gemäß der Kurve IV. Die in der Kraftangriffslinie einwirkenden Radialkraft Pr diametral entgegengerichtete Kraft Po ist gemäß der Kurve III wesentlich größer als gemäß der Kurve IV. Die Belstbarkeit des erfindungsgemäßen Wälzlagers ist dementsprechend erheblich größer als bei konventionellen Lagern.

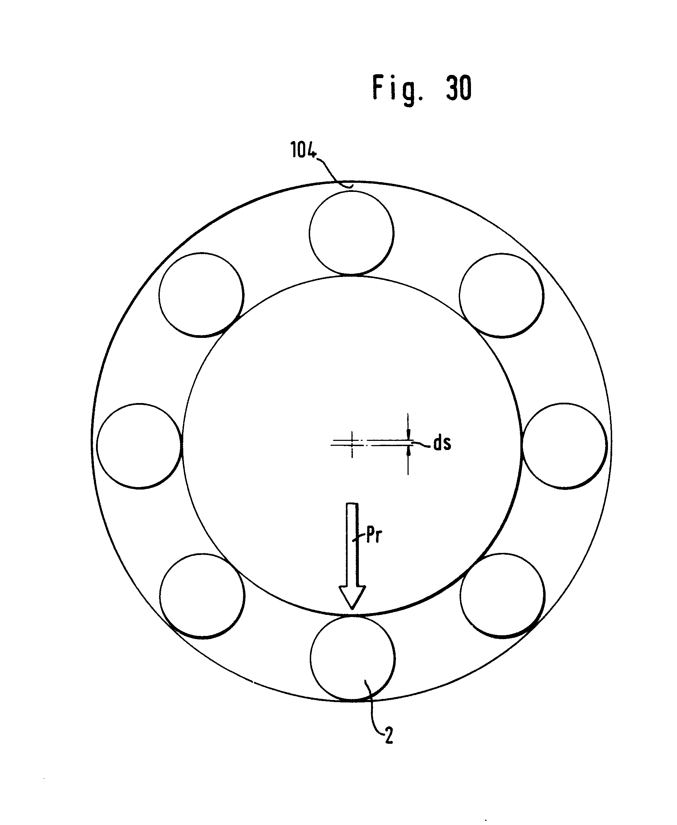

Fig. 30 zeigt schematisch die Veränderung der Lagerluft bei Belastung und einer Deformation ds aufgrund einer Radialkraft Pr. Das in der Zeichnung unten befindlichee Wälzelement 2 wird deformiert und zwischen die hier nur schematisch als Kreise dargestellten Stützringe eingespannt. Das in der Zeichnung oben, in der entlasteten Zone befindliche Wälzelement des mit einem Käfig geführten konventionellen Wälzlagers, weist zum äußeren Lagering einen Luftspalt 104 auf. In Folge der Lagerluft und der Radiallast werden die Wälzelemente der entlasteten Zone durch die Käfig-und Schmiermittelreibung zunächst stark abgebremst und beim Einlauf in die Lastzone wieder beschleunigt. Es entstehen Reibungswärme sowie Taumelbewegungen der Wälzelemente in den Käfigtaschen und Rollbahnen. Diese Nachteile werden bei den erfindungsgemäßen Wälzlagern vermieden, da die Käfigreibung entfällt und darüberhinaus erfindungsgemäß eine radiale Vorspannung mit dem elastisch federnden Stützring den Wälzelementen aufgegeben wird. Diese Vorspannung ist größer als der Reibwiderstand der inneren Wälzlagerung. Die Wälzelemente sind folglich auch bei vergleichweise niedrigen Drehzahlen zuverlässig an einem der Stützringe, und zwar insbesondere an dem äußeren Stützring, zur Anlage gebracht und geführt. Durch die in Umfangsrichtung nachgiebige Ausführung des Führungsringes können minimale Bewegungen in Umfangsrichtung beim Einlaufen in bzw. Auslaufen aus der Lastzone ausgeglichen werden.

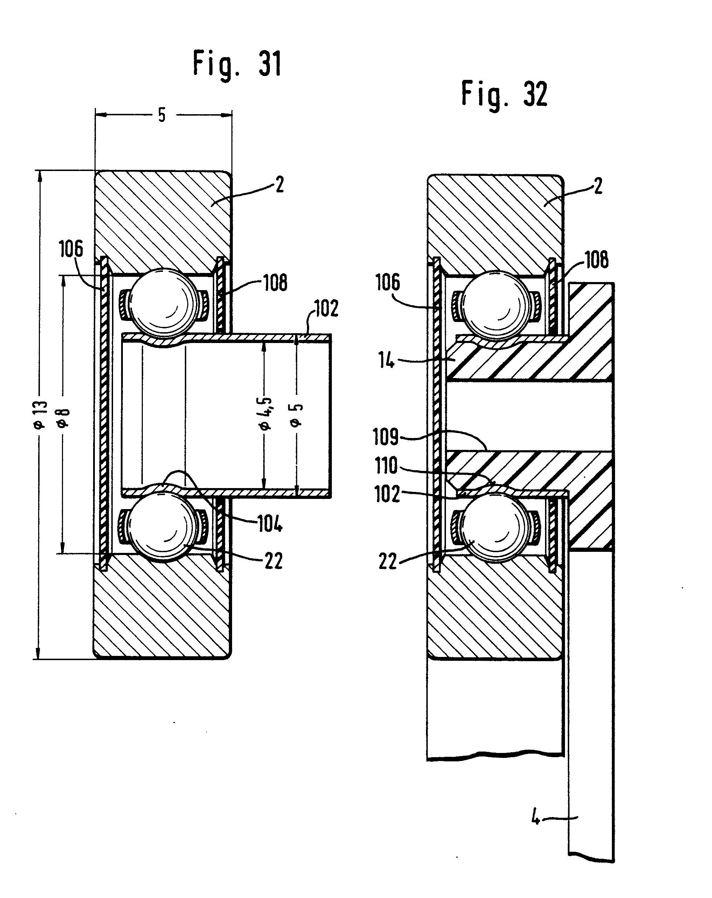

Fig. 31 zeigt in einem axialen Schnitt das ringförmige Wälzelement 2, welches mittels den Wälzkörpern 22 des inneren Wälzlagers auf der dünnwandigen Hülse 102 gelagert ist. Die dünnwandige Hülse 102 bildet gleichfalls den oben erläuterten Bolzen und ragt, wie dargestellt, auf der rechten Seite aus dem Wälzelement 2 heraus. Das herausragende Ende der Hülse 102 ist entsprechend den eingangs erläuterten Ausführungsformen in dem hier nicht weiter dargestellten elastischen Führungsring befestigt. Die Hülse 102 bildet ferner den inneren Lagerring und enthält hierzu eine ringförmige Rille 104, in welcher die Führungskörper 22 laufen. Es ist eine vordere, geschlossene Dichtscheibe 106 und auf der anderen Seite eine ringförmige Dichtscheibe 108 vorhanden, die die Abdichtung zur Führungshülse 102 übernimmt. Bei einer über die Lagerlsuft hinausgehende Deformation oder Ovalisierung des dickwandigen Führungselementes 2 erfolgt erfindungsgemäß eine zusätzliche Verformung der dünnwandigen Führungshülse 102, wodurch nur kleine Rückstellkräfte auf die Wälzkörper 22 resultieren.

Fig. 32 zeigt eine Ausführungsform ähnlich Fig. 31, wobei nunmehr auch der federelastische Führungsring 4 zu erkennen ist. Der Führungsring 4 besteht aus einem elastisch verformbaren Material, insbesondere einem Kunststoff, und weist integral einen angeformten, elastischen Bolzen 14 mit einer durchgehenden Öffnung 109 auf. Die axiale Fixierung erfolgt durch eine rillenförmige Einbuchtung 110 des Bolzens 14.

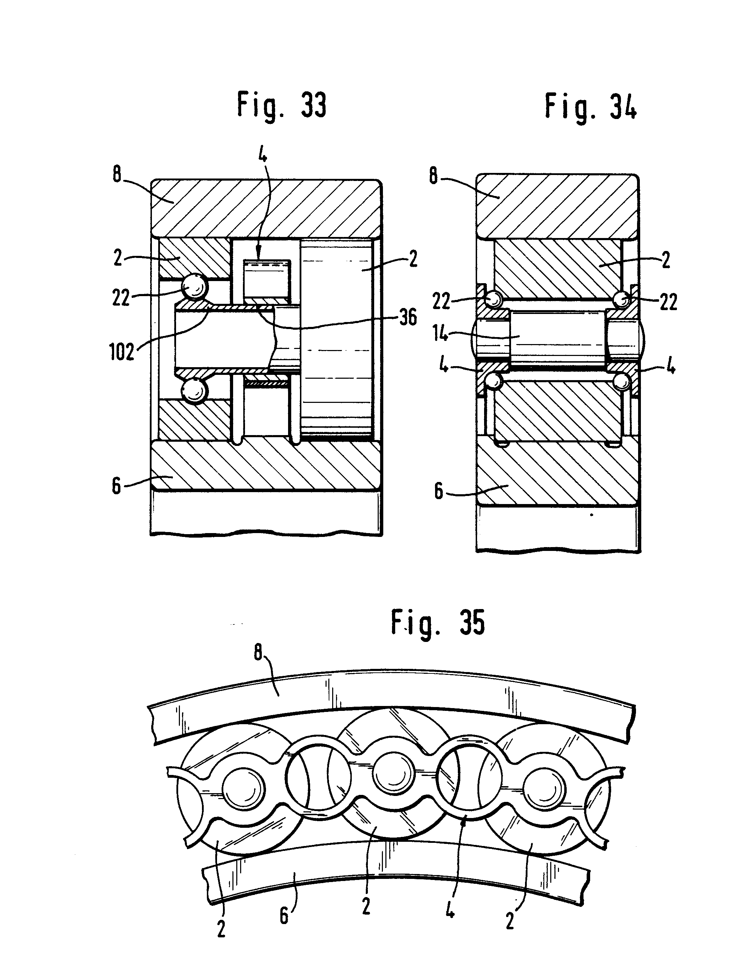

Fig. 33 zeigt eine Ausführungsform des Wälzlagers mit den Stütz-oder Lagerringen 6, 8. Es sind hier zwei Wälzelemente 2 mit parallelen Drehachsen zu erkennen, die jedoch in Umfangsrichtung versetzt angeordnet sind. Die Hülse 102 ist in die Bohrung 36 des Führungsringes 4 eingesetzt, welcher axial zwischen den Wälzelementen 2 angeordnet ist.

Fig. 34 zeigt einen Längsschnitt durch ein Wälzlager mit einer verbreiterten Wälzrolle bzw. Wälzelement, die in zwei, beidseitig angeordneten Führungsringen 4 über kleine Kugeln 22 gelagert sind. Die axiale und radiale Befestigung erfolgt über den mittig angeordneten Bolzen 14. Diese Ausführungsform ist besonders preisgünstig herzustellen, da die zur Aufnahme der Wälzkörper 22 erforderlichen Hohlrillen jeweils in die Stützringe 4 eingepreßt sind.

Fig. 35 zeigt schematisch eine axiale Ansicht des Wälzlagers aus Fig. 34. Der eine in Umfangsrichtung und radial federnd ausgebildete Führungsring 4 ist gut zu erkennen.

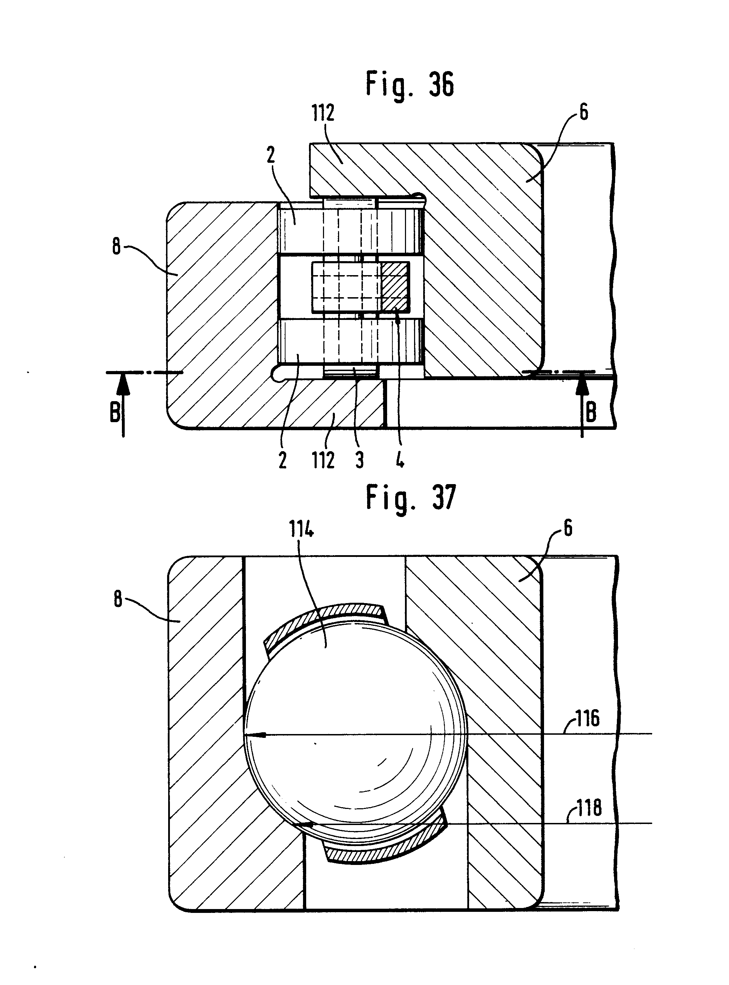

Fig. 36 zeigt in einem Längsschnitt eine besonders wesentliche Ausgestaltung, nämlich ein kombiniertes Radial-Axiallager. Zwischen dem inneren Stütz-und Lagerring 6 sowie dem äußeren Stütz- und Lagerring 8 befinden sich zwei axial beabstandete Wälzelemente 2, zwischen welchen der Führungsring 4 sich befindet. Diese Wälzelemente 2 dienen ausschließlich zur Radiallagerung. Hinter der Zeichenebene ist ein weiteres Wälzelement 3 angedeutet, das zur Axiallagerung dient. Hierzu sind die beiden Stützringe 6, 8 erfindungsgemäß mit axialen Stützscheiben 112 versehen, die zweckmäßig inegraler Bestandteil der Stützringe 6, 8 sind, bedarfsweise aber auch separat gefertigt werden können. Je nach Dominanz der Radial-oder Axiallast können die Wälzelemente 2 bzw. 3 paarweise oder auch einzeln angeorndet werden. Im Vergleich mit dem in fig. 37 dargestellten konventionellen Schrägkugellager der Baureihe 32 oder einem Vierpunktlager känen mit dem erfindungsgemäßen kombinierten Radial-Axiallager erheblich größere Radial-und Axiallasten auch bei häheren Drehzahlen zuverlässig übertragen werden. Bekanntlich treten bei den Kugeln 114 des bekannten Lagers aufgrund der unterschiedlichen Durchmesser 116 und 118 der Rollbahnen des äußeren Stützringes 8 und entsprechend auch des inneren Stützringes 6 Schlupf-oder Reibungsverluste auf, die bei der erfindungsgemäßen Anordnung vermieden werden. Die Rollbahnen der Radial-Wälzelemente 2 sind exakt zylindrisch, so daß ein Schlupf vermieden wird. In Folge der nieddrigen Rollwiderstände ist die Wärmeentwicklung des erfindungsgemäßen Radial-Axiallagers wesentlich niedriger als bei dem bekannten Lager gemäß Fig. 37. So beträgt beispielsweise der Reibwert eines Schrägkugellagers bei einem Lastwinkel von 45°, bei welchem die Radiallast gleich der Axiallast ist, gleich 0,005, währen bei dem erfindungsgemäßen Lager ein Reibwert von 0,001 bis 0,0015 realisiert wird.

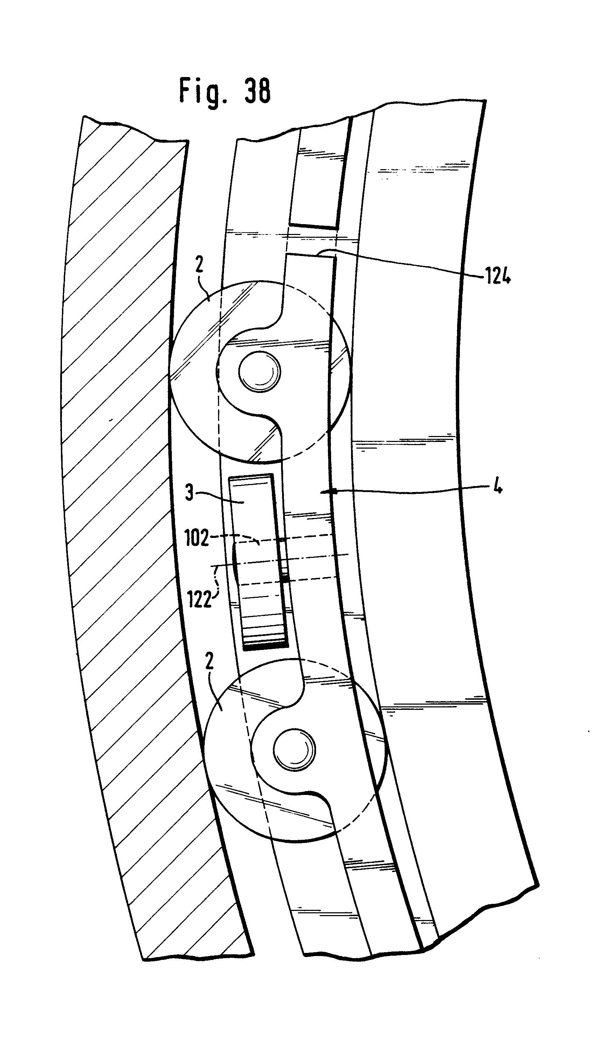

Fig. 38 zeigt einen Schnitt entlang Schnittlinie B gemäß Fig. 36. In Umfangsrichtung zwischen den Radial-Wälzelementen 2 befinden sich die Axial-Wälzelemente 3, deren Drehachsen 122 jeweils radial ausgerichtet sind. Auch die Axial-Wälzelemente 3 sind jeweils mit einer Hülse 102 auf dem Führungsring 4 entsprechend den Wülzelementen 2 angeordnet und befestigt. Aufgrund der radialen und axialen Führung mittels der Wälzelemente 2 und 3 kann der Führungsring 4 auch mit einem Schlitz 124 versehen sein. Der Führungsring 4 kann zwecks kostengünstiger Fertigung aus einem zunächst geradlinigem Band geschnitten werden, um nachfolgend in der dargestellten Weise gebogen zu werden, wobei zwischen den Enden des erfindungsgemäß offenen Führungsringes der Schlitz 124 vorhanden ist.

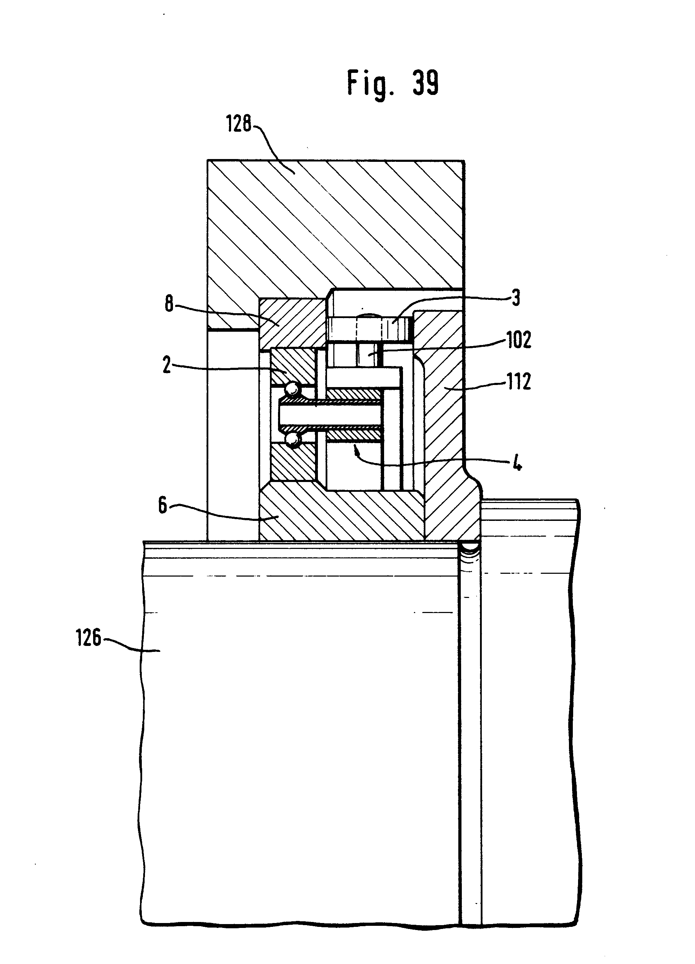

Fig. 39 zeigt eine weitere Ausgestaltung eines kombinierten Radial-Axiallagers. Der innere Stützring 6 ist beispielsweise auf einer Welle 126 und der äußere Lagerring 8 in einem Lagerträger 128 angeordnet. Die Radial-Wälzelemente 2 laufen zwischen den genannten Stützringen 6 und 8. Die Axial-Wälzelemente 3 befinden sich zwischen einer axialen Stirnfläche des äußeren Stützringes 8 und dem auf der Welle 126 befestigten axialen Stützscheibe 112 und sind jeweils mittels einer radial gerichteten Hülse 102 im Führungsring 4 befestigt.

Bezugszeichenliste

    2, 3 Wälzelement
    4 Führungsring
    6, 8 Stützring
    9 Lagerachse
    10 Pfeil
    12 Drehachse
    14 Bolzen
    16 inneres Wälzlager
    18 Lagerring
    20 Dichtring
    22 Wälzkörper
    24 Wanddicke von 2
    26 bogenförmiger Bügel
    27 Durchbrechungen
    28 ringartige Halterung
    30 Abstand
    32 Wanddicke von 26
    34 Abstand von 2
    36 Bohrung von 4
    38 Schlitz
    39 Teil von 4
    40 Glied
    41 Ringnut
    42 Langloch
    44 Niet
    46 Bund
    48 Kopf
    50 Außenfläche
    52 Radius
    54 Pfeil
    55 Ringschulter
    56 Sicherungsring
    58 Öffnungswinkel
    60, 62 Nadellager
    64 Stützscheibe
    66 Kupplungsteil
    68, 70 Schicht, Elastomer
    72 Gehäuse
    74 Getriebewelle

76, 78 Haltekörper
80 Schraubbolzen
82 Ziehkeil
84 Nadellagerkäfig
86 Ringspannfeder
88 Kegelring
90 Spannmutter
92, 94 Welle
96 Lager
98 Kupplung
100 massives Wälzelement
102 Hülse
104 Rille
106, 108 Dichtscheibe
109 Öffnung
110 Einbuchtung
112 axiale Stützscheibe
114 Kugel
116, 118 Durchmesser
122 Drehachse von 3
124 Schlitz
126 Welle
128 Lagerträger

## Ansprüche

1. Anordnung mit Wälzelementen, die mittels eines Führungsringges geführt und zwischen zwei Stützringen angeordnet sind, dadurch gekennzeichnet, daß die Wälzelemente (2) jeweils auf und/oder mit einem Bolzen (14) drehbar gelagert sind, daß der Führungsring derart (4) nachgiebig ausgebildet ist und/oder die Bolzen (14) mit dem Führungsring (4) derart verbunden sind, daß die Wälzelemente (2) relativ zueinander Bewegungen ausführen können.

2. Anordnung nach Anspruch 1, dadurch gekennzeichnet, daß die ringförmigen Wälzelemente (2) jeweils mittels eines inneren Wälzlagers (16), insbesondere eines Kugel-oder Nagellagers, auf dem zugeordneten Bolzen (14)drehbar gelagert sind.

3. Anordnung, insbesondere nach Anspruch 1 oder 2, dadurch gekennzeichnet, daß die Wälzelemente (2, 3) ringförmig ausgebildet sind und daß der innere Lagerring (18) des inneren Wälzlagers (16) und/oder der Bolzen (14) des jeweiligen Wälzelementes (2) nachgiebig ausgebildet sind.

4. Anordnung nach Anspruch 3, dadurch gekennzeichnet, daß der innere Lagerring und/oder der Bolzen als eine dünnwandige Hülse (102) ausgebildet sind, der mit dem Führungsring (4) verbunden ist.

5. Anordnung nach einem der Ansprüche 1 bis 4, dadurch gekennzeichnet, daß die Wälzelemente (2, 3) bis zu 1% des Außendurchmessers bei der zulässigen Belastung deformierbar sind.

6. Anordnung, insbesondere nach einem der Ansprüche 1 bis 5, dadurch gekennzeichnet, daß der Führungsring (4) federelastisch ausgebildet ist und eine vorgebbare, geringe radiale Vorspannung auf die Wälzelemente (2) ausübt.

7. Anordnung, insbesondere nach einem der Ansprüche 1 bis 6, dadurch gekennzeichnet, daß zusätzlich zu den mit achsparallelen Drehachsen (12) angeordneten Wälzelementen (2) auf den Führungsring (4) in entsprechender Weise weitere Wälzelemente (3) mit im wesentlichen radial ausgerichteten Drehachsen (112) angeordnet sind.

8. Anordnung nach einem der Ansprüche 1 bis 7, dadurch gekennzeichnet, daß die Wälzelemente (2) unter Vermeidung eines Reibkontaktes über die Bolzen (14) mit dem Führungsring (4) drehbar verbunden sind und/oder daß die Wälzelemente (2) gegen Bewegungen längs deren Drehachse (12) gesichert sind.

9. Anordnung nach einem der Ansprüche 1 bis 8, dadurch gekennzeichnet, daß der Führungsring (4) seitlich der Wälzelemente (2) außerhalb deren Wälz-oder Lagerbereich angeordnet ist und/oder daß die Führungselemente (2) in Umfangsrichtung einen Abstand (34) aufweisen, der wesentlich kleiner ist als der Durchmesser der Wälzelemente (2) und/oder der Bolzen (4).

10. Anordnung nach einem der Ansprüche 1 bis 9, dadurch gekennzeichnet, daß die Bolzen (14) in Bohrungen (36) des Führungsringes (4) befestigt und insbesondere eingepreßt sind und/oder daß die Bolzen (14) drehfest, insbesondere unter Vorspannung, in den Bohrungen (36) und/oder Halterungen (28) des Führungsringes (4) befestigt sind.

11. Anordnung nach einem der Ansprüche 1 bis 10, dadurch gekennzeichnet, daß der Führungsring (4) aus einem elastisch nachgiebigen Werkstoff besteht und/oder daß die Außenfläche (50) des Wälzelements (2) ballig ausgebildet ist, wobei der Krümmungsradius (52) bevorzugt gleichgroß ist wie der Außendurchmesser des Wälzelementes (2).

12. Anordnung, insbesondere nach einem der Ansprüche 1 bis 11, dadurch gekennzeichnet, daß bei Ausbildung als Axiallager die Außenflächen jedes Wälzelementes (2) konisch ausgebildet sind, wobei die Kegelspitze bevorzugt auf der Lagerachse (9) liegt, oder daß die Wälzelemente (2) jeweils paarweise. auf einem der Bolzen (14) angeordnet sind, und/oder daß die Breite der Wälzelemente (2) höchstens um den Faktor 0,5 größer ist als der Außendurchmesser.

13. Anordnung, insbesondere nach einem der Ansprüche 1 bis 12, dadurch gekennzeichnet, daß zur Ausbildung als Getriebe die Wälzelemente (2) zwischen den beiden Stützringen, insbesondere elastisch, eingespannt sind und/oder daß wenigstens einer der Stützringe (6, 8) deformierbar ist, wobei der Führungsring (4) oder einer der beiden Stützringe (6,8) stationär festhaltbar ist und die Differenzdrehzahl zwischen den beiden Stützringen (6, 8) oder dem Führungsring (4) sowie dem nicht festgehaltenen Stützring abgreifbar ist.

14. Anordnung nach anspruch 13, dadurch gekennzeichnet, daß wenigstens einer der Stützringe (6, 8) mittels einer ringförmigen, federnden Schicht und/oder einem Elastomer, insbesondere in einem Gehäuse (72) oder auf einer Getriebewelle (74) befestigt ist.

15. Anordnung nach einem der Ansprüche 1 bis 14, dadurch gekennzeichnet, daß die Wälzelemente (2) und/oder der Führungsring (4) und/oder die Bolzen (14) in axialer Richtung gegeneinander gesichert sind und/oder daß der Führungsring (4) in einer Ringnut (41) wenigstens einer der Stützringe (6, 8) axial geführt ist.

16. Anordnung nach einem der Ansprüche 1 bis 15, dadurch gekennzeichnet, daß die inneren Wälzlager (16) einzeln abgedichtet sind, und zwar insbesondere mittels Dichtscheiben (106, 108), wobei durch die eine Dichtscheibe (108) die Hülse (102) und/oder der Bolzen (14) hindurchgeführt sind.

## Fig. 1

## Fig. 2

**Fig. 3**

**Fig. 4**

0 224 876

Fig. 5

Fig. 6

# Fig. 7

# Fig. 8

**Fig. 9**

**Fig. 10**

**Fig. 11**

**Fig. 12**

Fig. 13

Fig. 14

Fig. 15

Fig. 16

$F_y$

$F_x$

8

4

58

2

56

14

18

16

6

9

Fig. 17

60

4

8

2

62

14

12

64

6

Fig. 18

Fig. 19

0 224 876

Fig. 20

Fig. 21

Fig. 22

Fig. 25

## Fig. 23

Fig. 24

Fig. 26

# Fig. 27

# Fig. 28

Fig. 29

## Fig. 30

Fig. 31

Fig. 32

**Fig. 33**

**Fig. 34**

**Fig. 35**

## Fig. 36

## Fig. 37

## Fig. 38

Fig. 39